# EUROPÄISCHE PATENTSCHRIFT

(11) **EP 4 225 594 B1**
(45) Veröffentlichungstag und Bekanntmachung des Hinweises auf die Patenterteilung: **11.12.2024**
(21) Anmeldenummer: 21798279.2
(22) Anmeldetag: 04.10.2021
(51) Int. Cl.: B60C 11/03, B60C 11/12, B60C 11/04, B60C 11/13

(54) **FAHRZEUGLUFTREIFEN MIT UMFANGSRILLE**
PNEUMATIC VEHICLE TYRE WITH CIRCUMFERENTIAL CHANNEL
PNEU DE VÉHICULE À CANAL CIRCONFÉRENTIEL

(30) Priorität: 05.10.2020 DE 102020212560
(43) Veröffentlichungstag der Anmeldung: 16.08.2023
(73) Patentinhaber: Continental Reifen Deutschland GmbH, 30175 Hannover (DE)
(72) Erfinder: EIKERMANN, Wilke, 30165 Hannover (DE)
(74) Vertreter: Continental Corporation
(86) Internationale Anmeldenummer: PCT/DE2021/200140
(87) Internationale Veröffentlichungsnummer: WO 2022/073565

(56) Entgegenhaltungen:
- WO-A1-2014/178186
- JP-A- 2002 079 809
- US-A- 2 322 505
- US-A1- 2010 116 395
- US-A1- 2018 147 894
- US-A1- 2018 162 176
- US-A1- 2018 345 733

## Beschreibung

Die Erfindung betrifft einen Fahrzeugluftreifen, insbesondere Nutzfahrzeugreifen, mit einem eine Profilierung aufweisenden Laufstreifen mit zumindest einer in Umfangsrichtung des Fahrzeugluftreifens umlaufenden, auf eine Profiltiefe PT ausgeführten Umfangsrille, welche sich zumindest über mindestens einen Teilabschnitt des Umfangs des Fahrzeugluftreifens im Querschnitt senkrecht zur Umfangrichtung aus mindestens zwei in einer radialer Richtung R des Fahrzeugluftreifens aneinander anschließenden Rillenabschnitten zusammensetzt, einem zu einer in radialer Richtung R des Fahrzeugluftreifens verlaufenden Linie symmetrischen ersten Rillenabschnitt, dessen Breite in Achsrichtung A des Fahrzeugluftreifens kleiner als 3 mm ist und um nicht mehr als 10 % variiert, bevorzugt nicht mehr als 2 % variiert und besonders bevorzugt nicht mehr als 0,5 % variiert und einem radial inneren, gegenüber dem ersten Rillenabschnitt in Achsrichtung A erweiterten und die größte Querschnittsfläche von allen Rillenabschnitten aufweisenden zweiten Rillenabschnitt.

### Stand der Technik

Es ist bekannt und üblich, im Laufstreifen von Nutzfahrzeugluftreifen in Umfangsrichtung umlaufende Umfangsrillen vorzusehen. Solche Umfangsrillen trennen Umfangsrippen voneinander, die mit weiteren Rillen, beispielsweise Querrillen, versehen sein können, welche den Umfangsrippen eine klotzartige Strukturierung verleihen. Weit verbreitet in Laufstreifen von Nutzfahrzeugluftreifen sind Umfangsrillen mit einem Querschnitt senkrecht zur Umfangrichtung des Nutzfahrzeugluftreifens, der in der radialer Richtung R nur aus einem Rillenabschnitt aufweist. Bei einem Reifen ist die radiale Richtung R die Richtung, die von der Drehachse des Reifens, die die Achsrichtung A des Reifens definiert, d.h. der Mitte, des Reifens bzw. der Nabe der den Reifen tragenden Felge senkrecht zur Drehachse nach außen weist. In dieser Richtung wirkt bei der Drehung eines mit dem Nutzfahrzeugluftreifen ausgestatteten Rades die Zentrifugalkraft auf den Reifen. Ein Rillenabschnitt in der radialen Richtung R eines Querschnitts einer Umfangsrille senkrecht zur Umfangrichtung des Reifens zeichnet sich durch eine bestimmte geometrische Form des Querschnitts des Rillenabschnitts senkrecht zur Umfangrichtung des Reifens aus, die sich von der geometrische Form des Querschnitts eines anderen Rillenabschnitts senkrecht zur Umfangrichtung des Reifens klar unterscheidet. Weist daher eine Umfangsrille nur einen Rillenabschnitt in der radialen Richtung R auf, kann ihr Querschnitt senkrecht zur Umfangrichtung des Reifens durch eine geometrische Form beschrieben werden. Umfangsrillen mit nur einem Rillenabschnitt haben zum Beispiel einen V-förmigen oder U-förmigen Querschnitt senkrecht zur Umfangrichtung des Reifens.

Der Querschnitt einer Umfangsrille kann in ihrem Bodenbereich einen tiefsten Punkt aufweisen, an dem der Abstand zur Oberfläche des Laufstreifens am größten ist, der dann der Profiltiefe PT der Umfangsrille bei einem unbenutzten Riefen entspricht. Hierbei ist der Bodenbereich der Umfangsrille der Bereich der Umfangsrille, an dem von der Oberfläche des Laufstreifens des Reifens aus betrachtet die Rille am tiefsten ist, bzw. der den innersten Bereich der Umfangsrille darstellt, da hier der Abstand der Umfangsrille zur Mitte des Reifens bzw. Nabe des den Reifen tragenden Rades am geringsten ist. Dieser innerste Bereich einer Umfangsrille, ihr Bodenbereich, umfasst den tiefsten Punkt eines Querschnitts der Umfangsrille, der den größten Abstand, im Neuzustand des Fahrzeugluftreifens die Profiltiefe PT, von der Oberfläche des Laufstreifens hat, und den Bereich der Umfangsrille, dessen Abstand im Neuzustand des Fahrzeugluftreifens größer als 90 % der Profiltiefe PT von der Oberfläche des Laufstreifens ist. Der tiefste Punkt eines Querschnitts im Bodenbereich einer Umfangsrille kann genau ein Punkt des Randes der Umfangsrille sein. Es ist aber genauso möglich, dass es nicht einen tiefsten Punkt des Querschnitts der Umfangsrille gibt, sondern eine Gerade im Bodenbereich der Umfangsrille. Bei einem Querschnitt senkrecht zur Umfangsrichtung erstreckt sich diese Gerade in axialer Richtung A über eine gewisse Länge, verläuft dabei parallel zur Oberfläche des Laufstreifens und weist den größten Abstand zur Oberfläche des Laufstreifens auf, der beim unbenutzten Reifen der Profiltiefe PT entspricht. Der Rand des Querschnitts der Umfangsrille senkrecht zur Umfangsrichtung weist dann in Achsrichtung A des Reifens, auch als axiale Richtung bezeichnet, zwei Seiten auf, die bei einem einzelnen tiefsten Punkt im Bodenbereich der Umfangsrille aneinanderstoßen und bei einer Geraden im Bodenbereich der Umfangsrille, die den größten Abstand der Umfangsrille zur Oberfläche des Laufstreifens aufweist, in axialer Richtung seitlich dieser Geraden angeordnet sind. Falls eine Umfangsrille nicht axial mittig im Laufstreifen eines Reifens angeordnet ist, weist dabei eine Seite der Umfangsrille zur Mitte eines Fahrzeugluftreifens und die andere zur Außenseite eines Fahrzeugluftreifens. Beide Seiten sind in Form von Rillenflanken ausgeprägt, die typischerweise einen Winkel gegenüber der radialen Richtung R bilden. Dieser kann in Abhängigkeit von der Tiefe der Umfangsrille unterschiedlich sein, ist aber oft mindestens über einen gewissen Bereich der Tiefe der Umfangsrille, d.h. des Abstands der Umfangsrille von der Oberfläche des Laufstreifens konstant. Dann wird der Rand einer Seite der Umfangsrille durch eine Gerade gebildet, die senkrecht zur Umfangsrichtung ist und mit der radialen Richtung R einen konstanten Winkel einschließt. Ein Rillenabschnitt, bei dem die Seiten der Umfangsrille nahezu oder genau parallel zur radialen Richtung verlaufen, weist ein U-förmiges Profil auf. In diesem Rillenabschnitt schließt die Tangente der Seiten senkrecht zur Umfangsrichtung mit der radialen Richtung einen Winkel ein, der nicht größer als 10 ° ist. Insbesondere kann die Tangente parallel zur radialen Richtung verlaufen.

Laufen dagegen die beiden Seiten mit zunehmender Tiefe der Umfangsrille unter einen Winkel von größer als 10 ° gegenüber der radialen Richtung R in einem Rillenabschnitt aufeinander zu, weist der Rillenabschnitt einen V-förmigen Querschnitt auf. Bei einem exakten V-förmigen Querschnitt ist der Winkel über die Tiefe der Umfangsrille gleich, so dass die Rillenflanken des Querschnitts Geraden sind.

Üblicherweise ist die Form der Rillenflanken auf beiden Seiten der Umfangsrille gleich, so dass der Querschnitt der Umfangsrille senkrecht zur Umfangsrichtung zur radialen Richtung R symmetrisch ist.

Bei einem U-förmigen Querschnitt weist die Rille in ihrem untersten Bodenbereich, dem Rillengrund, entweder eine sehr geringe Krümmung mit einen tiefsten Punkt auf, am dem der Abstand zur Oberfläche des Laufstreifens der Profiltiefe PT bei einem unbenutzten Riefen entspricht oder eine Fläche in axialer Richtung, bei der der Abstand zur Oberfläche des Laufstreifens der Profiltiefe PT bei einem unbenutzten Reifen entspricht.

Bei einem V-förmigen Querschnitt dagegen können beide Seiten einer Umfangsrille direkt im tiefsten Punkt der Umfangsrille zusammenlaufen.

Ein Laufstreifen von Nutzfahrzeugluftreifen kann aber auch Umfangsrillen mit einem Querschnitt senkrecht zur Umfangrichtung des Nutzfahrzeugluftreifens aufweisen mit nur einem Rillenabschnitt in der radialer Richtung R, wobei der Querschnitt nicht symmetrisch zur radialen Richtung R ist. Fahrzeugluftreifen mit Umfangsrillen, die ein solchen Querschnitt senkrecht zur Umfangrichtung des Nutzfahrzeugluftreifens aufweisen, sind aus DE 10 2005 042 903 A1 bekannt. Beide Seiten der offenbarten Umfangsrillen sind in Form von Rillenflanken ausgeprägt, die oberhalb des Bodenbereichs der Umfangsrille als Geraden ausgeführt sind, die einen kleinen Neigungswinkel gegenüber der radialen Richtung R bilden. Diese kleinen Neigungswinkel (α und β) sind auf beiden Seiten der Rille unterschiedlich. Die geraden Abschnitte der Rillenflanken beider Seiten der Umfangsrillen reichen bis zur Oberfläche des Laufstreifens der gezeigten Fahrzeugluftreifen. Sehr ähnliche Umfangsrillen sind auch in der WO 2017/176280 A1 beschrieben. Die dargestellten Umfangsrillen unterscheiden sich nur dahingehend, welche Seite der Umfangsrille, die Seite zur Mitte eines Fahrzeugluftreifens oder die Seite zur Außenseite eines Fahrzeugluftreifens den kleineren Neigungswinkel gegenüber der radialen Richtung R aufweist. Bei der in DE 10 2005 042 903 A1 beschriebenen Umfangsrille besitzt die Seite zur Mitte eines Fahrzeugluftreifens vorzugsweise den kleineren Neigungswinkel. Durch den größeren Neigungswinkel der Seite der Umfangsrille, die zur Außenseite der Fahrzeugluftreifens weist, erhält das Profil des Laufstreifens zur Außenseite eine erhöhte Quersteifigkeit. Zudem tritt durch den größeren Neigungswinkel eine geringere Kompression im zur Außenseite der Fahrzeugluftreifens gerichteten Rillengrund auf, so dass die Gefahr von Rillenbrüchen in diesem Bereich verringert wird.

Bekannt sind jedoch auch wesentlich komplexere Ausgestaltungen der Querschnitte senkrecht zur Umfangrichtung von Umfangsrillen, wobei der Querschnitt aus zwei oder drei in einer radialer Richtung R des Fahrzeugluftreifen aneinander anschließenden Rillenabschnitten zusammengesetzt sein kann.

Hierbei umfasst der Querschnitt in bekannten Ausgestaltungen einen zur radialen Richtung R des Fahrzeugluftreifens symmetrischen ersten Rillenabschnitt, dessen Breite in Achsrichtung A konstant ist, und einen sich an diesen in der radialen Richtung anschließenden, radial inneren, gegenüber dem ersten Rillenabschnitt in Achsrichtung A erweiterten zweiten Rillenabschnitt, der den Bodenbereich der Umfangsrille umfasst.

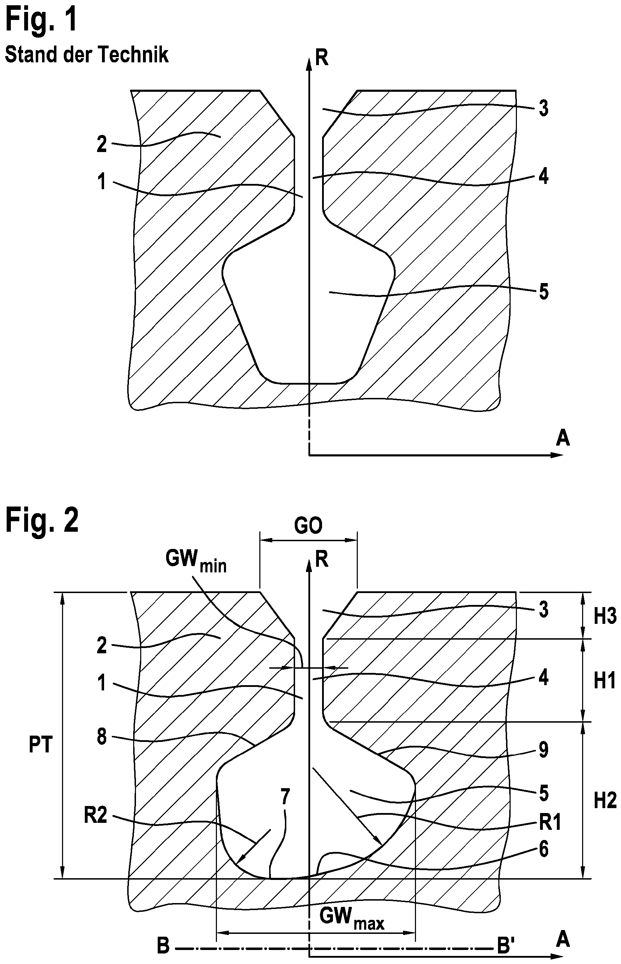

Bei einer solchen bekannten Form derartiger Umfangsrillen 1 in einem Laufstreifen 2 eines Fahrzeugluftreifens , von der ein Beispiel in Figur 1 gezeigt ist, weist ihr Querschnitt senkrecht zur Umfangrichtung zudem einen äußeren dritten Rillenabschnitt 3 auf, der sich nach außen erweitert und zur radialer Richtung R des Fahrzeugluftreifens symmetrisch ist. An diesen dritten äußeren ersten Rillenabschnitt 3 schließt sich in radialer Richtung (entgegen der Pfeilrichtung) ein erster Rillenabschnitt 4 an. Dieser ist in Achsrichtung A gegenüber dem dritten Rillenabschnitt 3 verengt und zur radialer Richtung R des Fahrzeugluftreifens symmetrisch. An diesen ersten Rillenabschnitt 4 schließt sich in radialer Richtung (entgegen der Pfeilrichtung) ein zweiter Rillenabschnitt 5 an. Dieser radial innenliegende Rillenabschnitt 5 weist einen gegenüber dem ersten Rillenabschnitt 4 in Achsrichtung A erweiterten Querschnitt auf.

Derartige Umfangsrillen eines Fahrzeugluftreifens sind aus der US 2,843,172 bekannt. Hierbei ist der dritte Rillenabschnitt, der sich nach außen erweitert, nur in bestimmten Positionen über den Umfang des Fahrzeugluftreifens symmetrisch zur radialer Richtung R des Fahrzeugluftreifens, da diese Rillenabschnitt über den Umfang eine in axialer Richtung A gewundene Form aufweist, die sinusförmig oder zickzackförmig sein kann. Der erste Rillenabschnitt besitzt gegenüber diesem dritten Rillenabschnitt eine reduzierte Breite in Achsrichtung A und ist zur radialer Richtung R des Fahrzeugluftreifens symmetrisch. Ein radial innenliegender zweiter Rillenabschnitt kann einen gegenüber dem ersten Rillenabschnitt in Achsrichtung A erweiterten Querschnitt aufweisen und ist dabei ebenfalls symmetrisch zur radialer Richtung R des Fahrzeugluftreifens. Der Rand des Querschnitts senkrecht zur Umfangrichtung weist dabei im Bodenbereich der Umfangsrille eine eckige Form auf. Dabei ist die Breite der Umfangsrille in Achsrichtung über einen der Großteil der Höhe des zweiten Rillenabschnitts in radialer Richtung nahezu unverändert, nachdem zunächst die Breite des Querschnitts des zweiten Rillenabschnitts senkrecht zur Umfangsrichtung des Reifens in axialer Richtung A mit zunehmenden Abstand von der Oberfläche des Laufstreifens bis zu einer maximalen Breite konstant zugenommen hat. In diesem Bereich des zweiten Rillenabschnitts wird der Rand des Querschnitts des zweiten Rillenanschnitts durch eine Gerade gebildet. Die Höhe eines Rillenabschnitts ist die maximale Ausdehnung des Rillenabschnitts in der radialen Richtung R. Der Bereich nahezu unveränderter Breite bildet den innersten Bereich des zweiten Rillenabschnitts, der den größten Abstand zur Oberfläche des Laufstreifens des Fahrzeugluftreifens aufweist, und umfasst daher auch den Bodenbereich der Umfangsrille, der durch eine Fläche in axialer Richtung A gebildet wird, bei der der Abstand zur Oberfläche des Laufstreifens der Profiltiefe PT der Umfangsrille bei einem unbenutzten Riefen entspricht. Auch in diesem innersten Bereich wird der Rand der Querschnitts des zweiten Rillenanschnitts auf beiden Seiten durch eine Gerade gebildet, so dass die Rillenflanken des zweiten Rillenabschnitts senkrecht zur Umfangsrichtung des Reifens eine Kontur aufweist, die im Wesentlichen aus zwei geraden Abschnitten besteht. Der inneren geraden Abschnitte der Rillenflanken bilden mit der Fläche des Bodenbereichs Ecken.

Aus der DE 10 2017 208 010 A1 ist ein Fahrzeugluftreifen der eingangs genannten Art bekannt. Offenbart ist ein Fahrzeugluftreifen mit einem Laufstreifen mit Umfangsrillen. Dabei weist Querschnitt der Umfangsrille senkrecht zur Umfangrichtung einen äußeren dritten Rillenabschnitt auf, der eine Trichterform als Querschnitt aufweist, die zur radialer Richtung R des Fahrzeugluftreifens symmetrisch ist. An diesen äußeren dritten Rillenabschnitt schließt sich in radialer Richtung ein erster Rillenabschnitt mit einer konstanten Breite in Achsrichtung A an, die der geringsten Breite in Achsrichtung A des dritten Rillenabschnitts entspricht. Auch dieser erste Rillenabschnitt ist zur radialer Richtung R des Fahrzeugluftreifens symmetrisch. An diesen ersten Rillenabschnitt schließt sich in radialer Richtung R ein zweiter innerer Rillenabschnitt an. Er weist einen gegenüber dem ersten Rillenabschnitt in Achsrichtung A erweiterten Querschnitt auf. Er weist zwei Deckenflanken auf, durch die sich die Breite des zweiten Rillenabschnitts in axialer Richtung A mit größeren Abstand zur Oberfläche des Laufstreifens des gezeigten Reifens symmetrisch zur radialen Richtung R bis zu einem maximalen Wert erweitert. Mit weiter zunehmendem Abstand von der Laufstreifen-oberfläche nimmt danach die Breite des Rillenabschnitts in axialer Richtung langsam ab, bis der Bodenbereich der Rille erreicht ist, am dem die maximale Profiltiefe PT der Rille vorliegt. Hierbei weist der Querschnitt des zweiten Rillenabschnitts senkrecht zur Umfangsrichtung symmetrisch zur radialen Richtung R angeordnet auf beiden Seiten der Rillenabschnitts Geraden an seinen Rand auf, die mit zunehmenden Abstand von der Laufflächenoberfläche unter einem kleinen Neigungswinkel zur radialen Ache R aufeinander zulaufen, bis sie den Bodenbereich des Rillenabschnitts erreichen, der durch eine Fläche senkrecht zur radialen Richtung R in Achsrichtung A gebildet wird. Der Neigungswinkel der zulaufenden Geraden zur radialen Richtung R liegt typischerweise im Bereich von 5° bis 25°.

Die zuvor beschriebenen Umfangsrillen, die drei in radialer Richtung aufeinander folgende Rillenabschnitte aufweisen, haben durch den mittleren Rillenabschnitt geringer Breite in axialer Richtung R eine reduzierten Rollwiderstand, da sich die Flanken der Umfangsrille in diesem Rillenabschnitt bei Fahrbahnkontakt der Flanken der Umfangsrille berühren, wodurch im Bereich der Umfangsrille eine weitere radiale Deformation durch das Fahrzeuggewicht im Laufstreifen des Fahrzeugluftreifens verhindert wird. Zudem wird in diesem Bereich durch das Berühren der Rillenflanken der Kontaktdruck reduziert, was zur Verringerung des Reifenabriebs führt.

Außerdem wiesen die zuvor beschriebenen Umfangsrillen durch den großen Querschnitt des inneren zweiten Rillenanschnitts gute Entwässerungseigenschaften auf. Hierdurch wird das Aquaplaningverhalten des Fahrzeugluftreifens mit zunehmendem Profilabtrag verbessert.

Das Problem von Rillenbrüchen, dass insbesondere im Schulterbereich von Fahrzeugluftreifen erhöht ist und damit in den Außenrillen, die in axialer Richtung außen im Laufstreifen des Fahrzeugluftreifen angeordnet sind, wird bisher bei den zuvor beschriebenen Umfangsrillen, die drei in radialer Richtung aufeinander folgende Rillenabschnitte aufweisen, durch ein Vorsehen von Lamellen, d.h. Einschnitten, die zumeist regelmäßig auf der äußeren Fläche des Laufstreifens angeordnet sind, gelöst. Bei einem zunehmenden Abtrag des Laufstreifens des Fahrzeugluftreifens im Laufe der Nutzung werden die Lamellen an der Oberfläche jedoch mit abgetragen. Entsprechend steigt bisher die Gefahr von Rillenbrüchen bei zunehmender Reifennutzung durch den damit verbundenen Abtrag des Laufstreifens.

Ebenso sind Umfangsrillen mit einem Querschnitt senkrecht zur Umfangsrichtung in einem Fahrzeugluftreifen bekannt, der nur den ersten und den zweiten Rillenabschnitt umfasst. Dabei kann durch eine geringe Breite des ersten Rillenabschnitts bei Fahrbahnkontakt des ersten Rillenabschnitts der zweite Rillenabschnitt zu einem Kanal werden, der nicht mehr mit der Laufstreifenoberfläche verbunden ist. Wie in der US 2018/0244111 A1 gezeigt, können dann Öffnungen in der Umfangsrille vorgesehen sein, um bei Nässe Wasser von der Fahrbahnoberfläche in den Kanal des zweite Rillenabschnitts gelangen zu lassen, wodurch die Aquaplaninggefahr gemindert wird.

Generell liegt bei einer zuvor beschriebenen Umfangsrille, deren Querschnitt senkrecht zur Umfangrille sich aus mindestens zwei Rillenabschnitten zusammensetzt, je nach erfolgtem Reifenabrieb und damit verbliebener Profiltiefe ein unterschiedliches Aquaplaningverhalten vor. Zunächst kann durch einen äußeren dritten Rillenabschnitt, falls vorhanden, ein erstes Aquaplaningverhalten vorhanden sein, dass aber nur bedingt der Performance einer offene Umfangsrille z.B. mit U-förmigem Profil entspricht. Ist dagegen, insbesondere durch den Gummiabrieb des Reifens, der erste Rillenabschnitt direkt an der Oberfläche des Laufstreifens des Fahrzeugluftreifens, so trägt die Umfangsrille aufgrund nicht mehr zu einem positiven Aquaplaningverhalten bei, da dann die Flanken des ersten Rillenabschnitts aneinanderstoßen, wenn die Umfangsrille mit der Fahrbahn in Kontakt kommt. Das Wasser auf der Fahrbahn kann dann nicht durch den ersten Rillenabschnitt in den größeren Querschnitt des inneren zweiten Rillenabschnitts gelangen, was sofort das Aquaplaning deutlich reduzieren würde. Dies ist erst der Fall, wenn der erste Rillenabschnitt zumindest fast vollständig oder vollständig abgetragen ist. Dann stellt der innere zweite Rillenabschnitt eine offene Umfangsrille dar, die durch ihren Querschnitt viel Wasser der Fahrbahn aufnehmen kann und dadurch die Gefahr von Aquaplaning in einem erheblichen Umfang reduziert.

Aus der US 2018/0147894 A1 ist ein Fahrzeugluftreifen mit einem Laufstreifen mit vier auf Profiltiefe ausgeführten Umfangsrillen und zwei in den schulterseitigen Profilrippen ausgebildeten, in Umfangsrichtung umlaufenden Außenrillen bekannt. Jede Außenrille weist in radialer Richtung eine Tiefe von 30% bis 150% der Profiltiefe auf und setzt sich, im Querschnitt betrachtet, aus einem radial äußeren Rillenabschnitt und einem radial inneren Rillenabschnitt zusammen. Der radial äußere Rillenabschnitt ist bezüglich einer in radialer Richtung verlaufenden Linie symmetrisch ausgeführt und weist eine Breite von 0,3 mm bis 5,0 mm, beispielsweise von 2,0 mm, auf. Der radial innere Rillenabschnitt ist gegenüber dem radial äußeren Rillenabschnitt in axialer Richtung (Achsrichtung) erweitert und weist eine tropfenförmige Querschnittsfläche auf, welche asymmetrisch zur in radialer Richtung verlaufenden Linie ist. Die Querschnittsfläche des zweiten Rillenabschnitts der Außenrille ist asymmetrisch zur in radialer Richtung verlaufenden Linie, erstreckt sich beidseitig der in radialer Richtung verlaufenden Linie und weist am Bodenbereich einen Rand ohne Ecken auf.

Aus der US 2018/0162176 A1 ist ein Fahrzugluftreifen mit einem Laufstreifen mit Außenrillen mit einer Tiefe von 30% bis 150% der Profiltiefe bekannt. Die Außenrillen setzen sich, im Querschnitt betrachtet, aus einem radial äußeren Rillenabschnitt und einem radial inneren Rillenabschnitt zusammen. Der radial äußere Rillenabschnitt ist bezüglich einer in radialer Richtung verlaufenden Linie symmetrisch ausgeführt und verläuft in radialer Richtung. Der radial innere Rillenabschnitt weist einen kreisförmigen Querschnitt auf und ist gemäß einem Ausführungsbeispiel gegenüber dem radial äußeren Rillenabschnitt in Richtung zur Laufstreifenmitte versetzt ausgebildet, sodass die Querschnittsfläche des radial inneren Rillenabschnitts zwischen einer in radialer Richtung sowie mittig durch den radial äußeren Rillenabschnitt verlaufenden Linie und der Seite der Außenrille, die zur Mitte des Fahrzeugreifens weist, größer ist als die Querschnittsfläche des radial inneren Rillenabschnitts zwischen der in radialer Richtung verlaufenden Linie und der Seite der Umfangsrille, die zur Außenseite des Fahrzeugluftreifens weist.

Aus der JP2002079809 A, der US 2010/0116395 A1 sowie aus der WO 2014/178186 A1 ist jeweils ein Fahrzeugluftreifen mit einem Laufstreifen mit Außenrillen bekannt, welche sich, im Querschnitt betrachtet, aus einem in radialer Richtung verlaufenden, radial äußeren Rillenabschnitt und einem kanalförmigen, radial inneren Rillenabschnitt zusammensetzen. Der radial innere Rillenabschnitt ist bezüglich einer in radialer Richtung verlaufenden Linie asymmetrische ausgeführt und durch einen Bodenbereich mit vier Abschnitten begrenzt. Die Abschnitte verlaufen entlang von Radien, wobei drei der Abschnitte nach außen gewölbt und einer der Abschnitte nach innen gewölbt ist.

Der Erfindung liegt die Aufgabe zugrunde, Umfangsrillen für einen Fahrzeugluftreifen bereitzustellen, die die Vorteile der bisher bekannten Umfangsrillen, die mindestens zwei in radialer Richtung aufeinander folgende Rillenabschnitte aufweisen, weiter aufweisen und zusätzlich ein verbessertes Querschnittsprofil im Umfangsrichtung aufweisen, dass Rillenbrüche besser vermeidet. Insbesondere soll durch die verbesserte Struktur der Umfangsrillen die erhöhte Gefahr von Rillenbrüchen im Schulterbereich von Reifen reduziert werden. Vor allem soll durch das verbesserte Querschnittprofil auch das Risiko von Rillenbrüchen reduziert werden, wenn ein Fahrzeugluftreifen schon länger genutzt wurde. Zum einen sind dann die Lamellen an der Oberfläche weitgehend abgetragen. Vor allem ist dann aber durch vielfaches gleichmäßiges Abrollen des Reifens und den damit verbundenen permanenten Wechsel von Kompression und Zug im Bereich des der Schulter zugewandten Rillengrunds die Gefahr der Bildung von Rillenbrüchen in diesem Bereich stark erhöht. Zudem wird der Schulterbereich des Reifens bei Kurvenfahrten auch durch die maßgebliche Übertragung der Seitenführungskräfte besonders beansprucht.

Das Problem von Rillenbrüchen ist insbesondere bei Nutzfahrzeugen erhöht, da durch das hohe Eigengewicht der Fahrzeuge, das je nach Nutzung auch noch durch das Gewicht einer transportierten Ladung erhöht werden kann, sehr große Gewichtskräfte auf den Laufstreifen von Nutzfahrzeugreifen wirken, insbesondere die Profilblöcke des Profils des Laufstreifens. Besonders groß ist das Problem bei den Lenkachsreifen von Nutzfahrzeugen, die immer durch den gleichen Wechsel von Kompression und Zug beansprucht werden. Dies wird noch gesteigert, wenn die Nutzfahrzeuge hauptsächlich oder nur für den Fernverkehr eingesetzt werden.

### Zusammenfassung der Erfindung

Gelöst wird die Aufgabe durch Fahrzeugluftreifen, insbesondere Nutzfahrzeugreifen, gemäß Patentanspruch 1.

Es hat sich gezeigt, dass ein derartiges Flächenverhältnis den unterschiedlichen Belastungen der Seiten der Umfangsrille am besten Rechnung trägt, insbesondere wenn der Rand des zweiten Rillenabschnitts nach den zuvor beschriebenen Kriterien ausgestaltet ist.

Ein derartiger Fahrzeugluftreifen ist ein Fahrzeugluftreifen mit einem eine Profilierung aufweisenden Laufstreifen mit zumindest einer in Umfangsrichtung des Fahrzeugluftreifens umlaufenden, auf eine Profiltiefe PT ausgeführten Umfangsrille, welche sich zumindest über mindestens einen Teilabschnitt des Umfangs des Fahrzeugluftreifens im Querschnitt senkrecht zur Umfangrichtung aus mindestens zwei in einer radialer Richtung R des Fahrzeugluftreifen aneinander anschließenden Rillenabschnitten zusammensetzt, einem zur radialer Richtung R des Fahrzeugluftreifens symmetrischen ersten Rillenabschnitt, dessen Breite in Achsrichtung des Fahrzeugluftreifen kleiner als 3 mm ist und um nicht mehr als 10 % variiert, bevorzugt nicht mehr als 2 % variiert und besonders bevorzugt nicht mehr als 0,5 % variiert und einem radial inneren, gegenüber dem ersten Rillenabschnitt in Achsrichtung des Fahrzeugluftreifens erweiterten und die größte Querschnittsfläche von allen Rillenabschnitten aufweisenden zweiten Rillenabschnitt, dessen Querschnittsfläche asymmetrisch zur radialer Richtung R ist, sich beidseitig der radialen Richtung R erstreckt und im Bodenbereich der Umfangsrille einen Rand ohne Ecken aufweist.

Hierbei weist der Laufstreifen des Fahrzeugluftreifens also eine Profilierung auf, die mindestens eine, zumeist mehrere in Umfangsrichtung des Fahrzeugluftreifens umlaufende Umfangsrillen aufweist. Mindestens eine dieser Umfangsrillen ist auf eine Profiltiefe (PT) ausgeführt und hat zumindest über mindestens einen Teilabschnitt des Umfangs des Fahrzeugluftreifens einen Querschnitt senkrecht zur Umfangrichtung, der sich aus mindestens zwei in einer radialer Richtung R des Fahrzeugluftreifen aneinander anschließenden Rillenabschnitten zusammensetzt.

Diese Umfangsrille hat dann über dem gesamten Reifenumfang die gleiche Profiltiefe mit einer lediglich fertigungsbedingten Toleranz von typischerweise 0,10 bis 0,15 mm. Nur wenn in der Umfangrille Abnutzungsindikatoren (tread wear indicators) angeordnet sind, kann an diesen Stellen die Profiltiefe um die Höhe der Abnutzungsindikatoren abweichen. Die Höhe eines Abnutzungsindikators kann z.B. 1,2 mm betragen. Als Abnutzungsindikatoren sind z.B. Querstege in einer Umfangsrille am Rillengrund gleichmäßig über den Reifenumfang angeordnet.

Handelt es sich bei der zumindest einen in Umfangsrichtung des Fahrzeugluftreifens umlaufenden, auf eine Profiltiefe PT ausgeführten Umfangsrille um mehrere Umfangsrillen, so können diese dieselbe oder verschiedene Profiltiefen aufweisen, die jedoch wie zuvor erläutert über den Reifenumfang bei einer Umfangsrille gleich ist.

Die mindestens zwei aneinander anschließenden Rillenabschnitten liegen in einer radialen Richtung R des Fahrzeugluftreifens direkt hintereinander als Teile eines Querschnitts einer Umfangsrille des Fahrzeugluftreifens. Ein erfindungsgemäßer Fahrzeugluftreifen kann auch weitere Umfangsrillen aufweisen, die solche Rillenabschnitte nicht oder nur anders gestaltete Rillenabschnitte aufweisen.

Der erste Rillenabschnitt von den beiden Rillenabschnitten weist eine Breite in Achsrichtung des Fahrzeugluftreifen auf, die kleiner als 3 mm ist. Dabei variiert diese Breite um nicht mehr als 10 %, bevorzugt nicht mehr als 2 % und besonders bevorzugt nicht mehr als 0,5 %. In einer bevorzugten Ausführungsform ist die Breite des ersten Rillenabschnitts in Achsrichtung sogar konstant. Abweichungen sind dann allein auf die Grenzen der Fertigungsmöglichkeiten der Umfangsrillen im Fahrzeugluftreifen zurückzuführen. Die hierdurch auftretende Toleranz der Breite des ersten Rillenabschnitts ist typischerweise kleiner als 0,2 mm, vorzugsweise kleines als 0,15 mm und besonders vorzugsweise kleiner als 0,05 mm. Dieser erste Rillenabschnitt ist symmetrisch zur radialer Richtung R des Fahrzeugluftreifens. Durch die Symmetrie des ersten Rillenabschnitts zur radialer Richtung R wird dann also genau für die Umfangsrille festgelegt, in welcher radialer Richtung ihre mindestens zwei Rillenabschnitte sich aneinander anschließen.

Durch die geringe Breite des ersten Rillenabschnitts in Achsrichtung, die kleiner als 3 mm ist, wird sichergestellt, dass sich die Seiten des ersten Rillenabschnitts bei Fahrbahnkontakt eines Querschnitts der Umfangsrille aufgrund des Fahrzeuggewichts berühren, das das Gummi des Laufstreifens zusammendrückt, wodurch in diesem Bereich der Umfangsrille eine weitere radiale Deformation verhindert wird. Hierdurch wird der Rollwiderstand des Fahrzeugluftreifens erheblich gemindert. Zudem wird in diesem Bereich durch das Berühren der Rillenflanken der Kontaktdruck an der Oberfläche des Laufstreifens reduziert, was zur Verringerung des Reifenabriebs führt. Um die Wirkung sicher zu erzielen, wird typischerweise eine Breite des ersten Rillenabschnitts in Achsrichtung von 0,5 mm bis 2,8 mm, bevorzugt von 0,75 mm bis 2,25 mm und besonders bevorzugt von 1,1 mm bis 1,4 mm gewählt.

Der zweite Rillenabschnitt ist gegenüber dem ersten Rillenabschnitt radial innen entlang der radialen Richtung R angeordnet. Er ist gegenüber dem ersten Rillenabschnitt in Achsrichtung A erweitert und hat die größte Querschnittsfläche senkrecht zur Umfangsrichtung von allen Rillenabschnitten der Umfangsrille. Im Gegensatz zu dem ersten Rillenabschnitt ist die Querschnittsfläche des zweiten Rillenabschnitts asymmetrisch zur radialer Richtung R. Sie erstreckt sich zu beiden Seiten der radialen Richtung R, die zu der Umfangsrille gehört und weist im Bodenbereich der Umfangsrille, der durch den zweiten Rillenabschnitt gebildet wird, einen Rand ohne Ecken auf. D.h. es gibt keine Stelle am Rand des Querschnitts im Bodenbereich der Umfangsrille, an der zwei gerade Seite aneinanderstoßen oder sich der Neigungswinkel zur radialen Richtung diskontinuierlich, also sprunghaft ändert.

Durch die Asymmetrie der Querschnittsfläche senkrecht zur Umfangrichtung des zweiten Rillenabschnitts zur radialer Richtung R in einer oder mehrerer Umfangsrillen des erfindungsgemäßen Fahrzeugluftreifens kann die Gefahr von Rillenbrüchen dieser Umfangsrillen gemindert werden, da nun bei unterschiedlichen Belastungen der Umfangsrillen auf beiden Seiten der Umfangsrille in Achsrichtung A die Kontur des Randes der Querschnittsfläche senkrecht zur Umfangrichtung des zweiten Rillenabschnitts auf beiden Seiten entsprechend ausgestaltet ist. Die Gefahr von Rillenbrüchen wird insbesondere auch dadurch gemindert, dass der Rand der Querschnittsfläche senkrecht zur Umfangrichtung des zweiten Rillenabschnitts mindestens im Bodenbereich keine Ecken aufweist, wobei die Kontur beidseitig der radialen Richtung R unterschiedlich ausgestaltet ist. Durch diese Anforderung an die Kontur des Randes der Querschnittsfläche senkrecht zur Umfangrichtung werden Schwachstellen für Rillenbrüche durch die Unstetigkeit einer Kante im Werkstoff des Laufstreifens, einer Gummimischung, vermieden.

In einer vorteilhaften Weiterbildung der Erfindung ist vorgesehen, dass der Rand der Querschnittsfläche des zweiten Rillenabschnitts im Bodenbereich der Umfangsrille nur Rundungen aufweist. Hierbei weist der Rand im Bodenbereich der Umfangsrille Rundungen mit verschiedenen Krümmungen aus, die durch einen Krümmungsradius beschrieben werden. Insbesondere weist der Rand Rundungen mit einer konstanten Krümmung bzw. einem konstanten Krümmungsradius über eine gewisse Länge des Randes auf. In dem Bereich konstanter Krümmung entspricht der Rand dann einem Kreisbogen eines Kreises mit dem zugehörigen konstanten Krümmungsradius. Hierbei kann der Kreisbogen typischerweise ein Winkelbereich des Kreises von bis 90 ° umfassen. oft liegt der Winkelbereich des Kreisbogens im Bereich von 30 ° bis 75 °, bevorzugt zwischen 45 ° und 60 °. Der Winkelbereich des Kreisbogens kann jedoch auch nur einen relativ kleinen Wert haben und dabei kleiner als 30 ° des Kreises umfassen, sogar kleiner als 20 ° und 10 ° sein.

In einer anderen vorteilhaften Weiterbildung der Erfindung ist vorgesehen, dass der Rand der Querschnittsfläche des zweiten Rillenabschnitts im Bodenbereich der Umfangsrille nur Rundungen und Geraden aufweist. Auch in einer derartigen Ausgestaltung weist der Rand Rundungen mit verschiedenen Krümmungen aus, die durch einen Krümmungsradius beschrieben werden. Insbesondere weist der Rand Rundungen mit einer konstanten Krümmung bzw. einem konstanten Krümmungsradius über eine gewisse Länge des Randes auf. Die Winkelbereiche eines hierdurch gegebenen Kreisbogens können die gleichen Werte aufweisen wie bei der vorher beschriebenen Weiterbildung. In dieser Ausführungsform weist der Rand der Querschnittsfläche des zweiten Rillenabschnitts senkrecht zur Umfangsrichtung jedoch im Bodenbereich der Umfangsrille zusätzlich mindestens eine Gerade auf.

Im Bodenbereich der Umfangsrille kann eine Gerade vorhanden sein, die in axialer Richtung A verläuft. Ihr Abstand zur Oberfläche des Laufstreifens entspricht bei einem unbenutzten Riefen der Profiltiefe PT.

Der Rand des zweiten Rillenabschnitts kann auch auf einer oder beiden seiner Seiten der Umfangsrille eine Gerade aufweisen.

In einer weiterhin bevorzugten Ausführungsform weist im Bodenbereich des Umfangsrille die Seite der Umfangsrille eine Krümmung mit dem kleinsten Krümmungsradius aufweist, die zur Mitte des Fahrzeugluftreifens weist. Bei einer nicht axial mittig im Laufstreifen angeordneten Umfangsrille ist die Seite der Umfangsrille, die zur Mitte des Fahrzeugluftreifens weist, im Bodenbereich der Umfangsrille anders gekrümmt als die Seite der Umfangsrille, die zur Außenseite des Fahrzeugluftreifens weist. Dabei weist die Seite der Umfangsrille, die zur Mitte des Fahrzeugluftreifens weist, eine größere Krümmung mit einem kleineren Krümmungsradius auf. Die entsprechend kleinere Krümmung der Seite der Umfangsrille, die zur Außenseite des Fahrzeugluftreifens weist, erhöht die Quersteifigkeit dieser Seite und reduziert damit die Gefahr eines Rillenbruchs auf dieser Seite.

Hierbei ist im Bodenbereich der Umfangsrille bei der Seite der Umfangsrille, die zur Mitte des Fahrzeugluftreifens weist, typischerweise der kleinste Krümmungsradius der Krümmung um mindestens 20 % kleiner als der kleinste Krümmungsradius der Krümmung der anderen Seite, bevorzugt um mindestens 35 % kleiner als der kleinste Krümmungsradius der Krümmung der anderen Seite und besonders bevorzugt um mindestens 50 % kleiner als der kleinste Krümmungsradius der Krümmung der anderen Seite.

Bevorzugt handelt es sich bei einer der in Umfangsrichtung des Fahrzeugluftreifens umlaufenden, auf eine Profiltiefe PT ausgeführten Umfangsrille, die mindestens in einen Teilabschnitt des Umfangs einen Querschnitt senkrecht zur Umfangrichtung aufweist, der aus mindestens zwei in einer radialer Richtung R des Fahrzeugluftreifen aneinander anschließenden Rillenabschnitten mit den zuvor beschriebenen Eigenschaften zusammensetzt, um eine Außenrille eines erfindungsgemäßen Fahrzeugluftreifens.

In einer weiteren Ausführungsform handelt es sich bei beiden Außenrillen eines erfindungsgemäßen Fahrzeugluftreifens um derartige Umfangsrillen.

In einer weiteren Ausführungsform weist ein erfindungsgemäßer Fahrzeugluftreifen nur eine derartigen Umfangsrille auf, die eine der beiden Außenrillen des Fahrzeugluftreifens bildet.

In einer weiteren vorteilhaften Ausführungsform eines erfindungsgemäßen Fahrzeugluftreifens weist der zweite Rillenabschnitt des aus mindestens zwei Rillenabschnitten zusammengesetzten Querschnitts eine Querschnittsfläche senkrecht zur Umfangsrichtung auf, bei der über mindestens 35 % der Höhe des zweiten Rillenabschnitts in der radialen Richtung R die Querschnittsfläche ausgehend vom Bodenbereich der Umfangsrille asymmetrisch zur radialer Richtung R ist, bevorzugt über mindestens 50 % der Höhe des zweiten Rillenabschnitts in der radialen Richtung R die Querschnittsfläche ausgehend vom Bodenbereich der Umfangsrille asymmetrisch zur radialer Richtung R ist und besonders bevorzugt über mindestens 70 % der Höhe des zweiten Rillenabschnitts in der radialen Richtung R die Querschnittsfläche ausgehend vom Bodenbereich des Umfangsrille asymmetrisch zur radialer Richtung R ist.

Durch die Symmetrie des ersten Rillenabschnitts zur radialer Richtung R wird genau für die Umfangsrille festgelegt, in welcher radialer Richtung R ihre mindestens zwei Rillenabschnitte sich aneinander anschließen. Die Höhe des zweiten Rillenabschnitts in der radialen Richtung R ist definiert als die maximale Höhe der Querschnittsfläche in Richtung der radialen Richtung R und ist gegeben durch den maximalen Abstand zweier Punkte des Randes der Querschnittsfläche, den sie nur in der radiale Richtung R zueinander ausweisen. Ihr Abstand senkrecht zur radialen Richtung wird hier nicht betrachtet. Die Asymmetrie der Querschnittsfläche zur radialen Richtung R liegt über einen gewissen Anteil der Höhe des zweiten Rillenabschnitts in der radialen Richtung R vor. Hierbei beginnt der asymmetrische Bereich am Bodenbereich der Umfangsrille, der auch der Bodenbereich des zweiten Rillenabschnitts ist, und erstreckt sich von diesem Bereich aus über den gewissen Anteil der Höhe des zweiten Rillenabschnitts in der radialen Richtung R. Die Asymmetrie des zweiten Rillenabschnitts in seinem Bodenbereich und einem weiteren Anteil des Querschnitts in radialer Richtung R ist sehr vorteilhaft für die Vermeidung von Rillenbrüchen. Umso größer der Anteil des asymmetrischen Querschnitts ist, umso mehr kann die Umfangsrille unterschiedlichen Belastungen durch Kräfte auf ihren beiden Seiten in Achsrichtung A entsprechend Rechnung tragen. Dies ist generell umso mehr der Fall, je größer der Unterschied der kleinsten Krümmungsradien auf beiden Seiten der Umfangsrille im Bodenbereich der Umfangsrille ist.

Typischerweise ist der zweite Rillenabschnitt über eine Höhe von mindestens 3 mm, bevorzugt über eine Höhe von 4 mm und besonders bevorzugt eine Höhe von 5 mm in der radialen Richtung R ausgehend vom tiefsten Punkt der Umfangsrille asymmetrisch zur radialen Richtung R.

Bei einer Ausführungsform des erfindungsgemäßen Fahrzeugluftreifens ist im radial inneren Bereich des zweiten Rillenabschnitts, der asymmetrisch zur radialer Richtung R ist, die Querschnittsfläche des zweiten Rillenabschnitts zwischen der radialen Richtung R und der Seite der Umfangsrille, die zur Mitte des Fahrzeugluftreifens weist, um 15 % kleiner bis 45 % größer, bevorzugt um 5 % kleiner bis 35 % größer und besonders bevorzugt um 25 % bis 32 % größer als die Querschnittsfläche des zweiten Rillenabschnitts zwischen der radialen Richtung R und der Seite der Umfangsrille, die zur Außenseite des Fahrzeugluftreifens weist.

Daher beginnt der radial innere Bereich des zweiten Rillenabschnitts, der asymmetrisch zur radialer Richtung R ist und diese Querschnittsflächen aufweist, am Bodenbereich der Umfangsrille und erstreckt sich von diesem Bereich aus über eine entsprechende Distanz des zweiten Rillenabschnitts in der radialen Richtung R.

Bei einer Ausführungsform des erfindungsgemäßen Fahrzeugluftreifens weist der Rand der Querschnittsfläche des zweiten Rillenabschnitts an beiden Seiten der Umfangsrille eine Gerade aufweist, die nach innen auf die radiale Richtung R zuläuft, wobei die Gerade der Seite der Umfangsrille, die zur Mitte des Fahrzeugluftreifens weist, eine geringere Neigung gegenüber der radialen Richtung R aufweist als die Gerade der Seite der Umfangsrille, die zur Außenseite des Fahrzeugluftreifens weist.

Bei den Geraden der beiden Seiten der Umfangsrille, die nach innen auf die radiale Richtung R zulaufen, verringert sich mit zunehmenden Abstand von der Oberfläche des Laufstreifens des Fahrzeugluftreifens der Abstand zur radialen Richtung R, die durch die Symmetrie des ersten Rillenabschnitts definiert ist.

Typischerweise ist der Neigungswinkel gegenüber der radialen Richtung R der Geraden der Seite der Umfangsrille, die zur Außenseite des Fahrzeugluftreifens weist, 8 mal bis 100 mal, bevorzugt 12 mal bis 30 mal und besonders bevorzugt 17 bis 20 mal größer als der Neigungswinkel der Geraden der Seite der Umfangsrille, die zur Mitte des Fahrzeugluftreifens weist. Typischerweise weist dabei der Neigungswinkel der Geraden der Seite der Umfangsrille, die zur Mitte des Fahrzeugluftreifens weist, einen Wert von 0 ° bis 15 ° auf, bevorzugt einen Wert von 4 ° bis 11 ° auf und besonders bevorzugt einen Wert von 6 ° bis 9 ° auf. Typischerweise weist dabei der Neigungswinkel der Geraden der Seite der Umfangsrille, die zur Außenseite des Fahrzeugluftreifens weist, einen Wert von 10 ° bis 45 ° auf, bevorzugt einen Wert von 15 ° bis 35 ° auf und besonders bevorzugt einen Wert von 25 ° bis 32 ° auf.

Die größere Neigung der Geraden der Seite der Umfangsrille, die zur Außenseite des Fahrzeugluftreifens weist, erhöht die Quersteifigkeit dieser Seite und reduziert dadurch die Gefahr des Rillenbruchs auf dieser Seite.

Bei einer Ausführungsform des erfindungsgemäßen Fahrzeugluftreifens weist der Rand der Querschnittsfläche des zweiten Rillenabschnitts auf der Seite der Umfangsrille, die zur Außenseite des Fahrzeugluftreifens weist, eine Gerade mit einer Länge auf, die kleiner als 40 % der Höhe des zweiten Rillenabschnitts in der radialen Richtung R , bevorzugt kleiner als 20 % der Höhe des zweiten Rillenabschnitts in der radialen Richtung R und besonders bevorzugt kleiner als 10 % der Höhe des zweiten Rillenabschnitts in der radialen Richtung Rist.

Bei einer bevorzugten Ausführungsform des erfindungsgemäßen Fahrzeugluftreifens weist der Rand der Querschnittsfläche des zweiten Rillenabschnitts nur auf der Seite der Umfangsrille, die zur Mitte des Fahrzeugluftreifens weist, eine Gerade auf, die nach innen auf die radiale Richtung zuläuft.

Eine Ausgestaltung der Seite der Umfangsrille, die zur Mitte des Fahrzeugluftreifens weist, mit einer Geraden, die nur bevorzugt wie zuvor beschrieben einen kleinen Neigungswinkel gegenüber der radialen Richtung R aufweist, kann auf dieser Seite vorteilhaft sein, da hier nicht die Quersteifigkeit der angrenzenden Profilblöcke des Profils im Vordergrund steht, sondern die Möglichkeit durch die Form des zweiten Rillenabschnitts Wasser bei Straßennässe aufzunehmen und damit die Drainageeigenschaft des Umfangsrille zu verbessern. Durch eine derartige Ausgestaltung wird daher sowohl eine erhöhte Stabilität des Profils des Fahrzeugluftreifens gewährleistet als auch ein gutes Nässeverhalten des Fahrzeugluftreifens, wodurch insbesondere die Gefahr durch Aquaplaning angemessen verringert wird.

Bei einer Ausführungsform des erfindungsgemäßen Fahrzeugluftreifens weist die Querschnittsfläche des zweiten Rillenabschnitts senkrecht zur Umfangsrichtung eine maximale Breite senkrecht zur radialen Richtung R auf, die um 20 % kleiner bis 50 % größer, bevorzugt 5 % kleiner bis 35 % größer und besonders bevorzugt 10 % bis 17 % größer als die maximale Höhe der Querschnittsfläche in Richtung der radialen Richtung R ist. Hierbei ist die maximale Breite des Querschnittsfläche des zweiten Rillenabschnitts definiert als der maximale Abstand zweier Randpunkte des Randes der Querschnittsfläche, den sie nur in Achsrichtung A zueinander aufweisen. Anders ausgedrückt: die beiden Randpunkte, die die maximale Breite des zweiten Rillenabstands definieren, sind die beiden Punkte beider Seiten des zweiten Rillenabschnitts, die jeweils den größten Abstand zur radialen Richtung R aufweisen. Die maximale Breite des zweiten Rillenabstands ergibt sich dann als Summe der Abstände der beiden Punkte zur radialen Richtung R , die den größten Abstand zur radialen Richtung R aufweisen. Dabei ist es meistens so, dass beiden Punkte nicht den gleichen Abstand zur Oberfläche des Laufstreifens der Fahrzeugluftreifens aufweisen, d.h. in der gleichen Profiltiefe vorliegen.

Bevorzugt liegt der Punkt mit größten Abstand zur radialen Richtung R auf der Seite, die zur Außenseite des Fahrzeugluftreifens weist, bei einer größeren Profiltiefe als der Punkt mit größtem Abstand zur radialen Richtung R auf der Seite, die zur Mitte des Fahrzeugluftreifens weist. Hierbei beträgt der Unterschied der Profiltiefe beider Punkte typischerweise 0,5 % bis 15 % der maximalen Höhe der Querschnittsfläche des zweiten Rillenabschnitts in Richtung der radialen Richtung R, bevorzugt 1 % bis 6 % der maximalen Höhe der Querschnittsfläche des zweiten Rillenabschnitts in Richtung der radialen Richtung R und besonders bevorzugt 2 % bis 3 % der maximalen Höhe der Querschnittsfläche des zweiten Rillenabschnitts in Richtung der radialen Richtung R. Der Abstand des Randpunkts der Querschnittsfläche des zweiten Rillenabschnitts senkrecht zur Umfangsrichtung mit größten Abstand zur radialen Richtung R auf der Seite, die zur Außenseite des Fahrzeugluftreifens weist, zum tiefsten Punkt der Umfangsrille in radialer Richtung R beträgt typischerweise 30 % bis 80 % der maximalen Höhe der Querschnittsfläche des zweiten Rillenabschnitts in Richtung der radialen Richtung R, bevorzugt 50 % bis 75 % der maximalen Höhe der Querschnittsfläche des zweiten Rillenabschnitts in Richtung der radialen Richtung R und besonders bevorzugt 55 % bis 65 % der maximalen Höhe der Querschnittsfläche des zweiten Rillenabschnitts in Richtung der radialen Richtung R. Der Abstand des Randpunkts der Querschnittsfläche des zweiten Rillenabschnitts senkrecht zur Umfangsrichtung mit größten Abstand zur radialen Richtung R auf der Seite, die zur Mitte des Fahrzeugluftreifens weist, zum tiefsten Punkt der Umfangsrille in radialer Richtung R beträgt typischerweise 50 % bis 80 % der maximalen Höhe der Querschnittsfläche des zweiten Rillenabschnitts in Richtung der radialen Richtung R, bevorzugt 55 % bis 75 % der maximalen Höhe der Querschnittsfläche des zweiten Rillenabschnitts in Richtung der radialen Richtung R und besonders bevorzugt 60 % bis 70 % der maximalen Höhe der Querschnittsfläche des zweiten Rillenabschnitts in Richtung der radialen Richtung R.

Bevorzugt ist der Abstand zur radialen Richtung R des Randpunkts der Querschnittsfläche des zweiten Rillenabschnitts senkrecht zur Umfangsrichtung mit größten Abstand zur radialen Richtung R auf der Seite, die zur Außenseite des Fahrzeugluftreifens weist, größer als der Abstand zur radialen Richtung R des Randpunkts der Querschnittsfläche des zweiten Rillenabschnitts senkrecht zur Umfangsrichtung mit größtem Abstand zur radialen Richtung R auf der Seite, die zur Mitte des Fahrzeugluftreifens weist. Dabei ist typischerweise der Abstand zur radialen Richtung R des Randpunkts mit größten Abstand zur radialen Richtung R auf der Seite, die zur Außenseite des Fahrzeugluftreifens weist, um 5 % bis 35 % größer, bevorzugt um 8 % bis 25 % größer und besonders bevorzugt um 12 % bis 18 % größer als der Abstand zur radialen Richtung R des Randpunkts mit größten Abstand zur radialen Richtung R auf der Seite, die zur Mitte des Fahrzeugluftreifens weist.

Durch die zuvor genannte Positionierung des Randpunkte mit größten Abstand zur radialen Richtung R auf den beiden Seiten des zweiten Rillenabschnitts wird sowohl eine gute Quersteifigkeit des Profils des Laufstreifens des Fahrzeugluftreifens auf der Seite der Umfangsrille erreicht, die zur Außenseite des Fahrzeugluftreifens weist, als auch ein gutes Nässeverhalten des Fahrzeugluftreifens.

Bei einer Ausführungsform des erfindungsgemäßen Fahrzeugluftreifens setzt sich bei mindestens einer der zumindest einen in Umfangsrichtung des Fahrzeugluftreifens umlaufenden Umfangsrillen der Querschnitt senkrecht zur Umfangrichtung in dem mindestens einen Teilabschnitt des Umfangs des Fahrzeugluftreifens beginnend an der Laufstreifenaußenfläche nur aus drei in einer radialer Richtung R des Fahrzeugluftreifen aneinander anschließenden Rillenabschnitten zusammen, wobei sich ein dritter äußerer Rillenabschnitt nach außen erweitert und zur radialen Richtung R des Fahrzeugluftreifens symmetrisch ist und sich der erste Rillenabschnitt gegenüber dem dritten Rillenabschnitt in Achsrichtung A verengt.

Dieser dritte Rillenabschnitt schließt sich nach außen in radialer Richtung an den ersten Rillenabschnitt an und endet an der Oberfläche des Laufstreifens des Fahrzeugluftreifens. Er erweitert sich nach außen, also zur Außenfläche des Laufstreifens hin, und ist genauso wie der erste Rillenabschnitt symmetrisch zur der radialer Richtung R des Fahrzeugluftreifens. Der erste Rillenabschnitt ist dabei gegenüber dem dritten Rillenabschnitt verengt.

Bevorzugt erweitert sich der Querschnitt des äußeren dritten Rillenabschnitts senkrecht zur Umfangsrichtung gleichmäßig nach außen. Hierdurch hat der Querschnitt des äußeren dritten Rillenabschnitts die Form von einem gleichschenkligen und damit symmetrischen Trapez.

Typischerweise weist der dritte Rillenabschnitt bei einem neuen Fahrzeugluftreifen zunächst an der Oberfläche des Laufstreifens eine Breite in Achsrichtung A von 2,5 mm bis 5,0 mm auf, bevorzugt eine Breite von 3,5 mm bis 4,6 mm und besonderes bevorzugt eine Breite von 3,75 mm bis 4,25 mm. In radialer Richtung R in Richtung auf die Radachse verjüngt sich dann der dritte Rillenabschnitt typischerweise bis auf eine Breite in Achsrichtung A von 0,8 mm bis 2,5 mm, bevorzugt eine Breite von 1,0 mm bis 1,7 mm und besonders bevorzugt auf eine Breite von 1,1 mm bis 1,4 mm.

Typischerweise besitzen die beiden Seiten des Querschnitts des dritten Rillenabschnitts senkrecht zur Umfangsrichtung, wenn sich der dritte Rillenabschnitt gleichmäßig nach außen erweitert, einen Neigungswinkel von 25 ° bis 45 °, bevorzugt von 30 ° bis 40 ° und besonders bevorzugt von 33 ° bis 37 ° gegenüber der radialen Richtung R. Durch die Neigung der Seitenwände ist der erste Rillenabschnitt in der Lage, bei Nässe Wasser aufzunehmen und so das Nässeverhalten des Fahrzeugluftreifens zu verbessern.

In einer Ausführungsform der Fahrzeugluftreifen ist bei allen der zumindest einen in Umfangsrichtung des Fahrzeugluftreifens umlaufenden Umfangsrillen ein dritter äußerer Rillenabschnitt von den zuvor genannten Eigenschaften vorhanden, so dass sich in den Teilabschnitten des Umfangs des Fahrzeugluftreifens, in denen sich der Querschnitt aus den mindestens zwei Rillenabschnitten zusammensetzt, der Querschnitt der Umfangsrillen senkrecht zur Umfangsrichtung nur aus den drei in der radialen Richtung R des Fahrzeugluftreifen aneinander anschließenden Rillenabschnitten zusammensetzt, nämlich dem ersten, dem zweiten und dem dritten Rillenabschnitt mit den zuvor genannten Eigenschaften.

In einer Ausführungsform des erfindungsgemäßen Fahrzeugluftreifens weist die zumindest eine in Umfangsrichtung des Fahrzeugluftreifens umlaufende, auf Profiltiefe PT ausgeführte Umfangsrille über den gesamten Umfang des Fahrzeugluftreifens den gleichen Querschnitt senkrecht zur Umfangrichtung auf. Dieser setzt sich aus mindestens zwei in radialer Richtung R des Fahrzeugluftreifen aneinander anschließenden Rillenabschnitten zusammen, dem ersten Rillenabschnitt und dem zweiten inneren Rillenabschnitt. Dann weist der zweite innere Rillenanschnitt, bevorzugt mit den beschriebenen Eigenschaften, über den ganzen Reifenumfang eine gute Querstabilität gegen Rillenbrüche und ein gutes Nässeverhalten auf.

In einer Ausführungsform des erfindungsgemäßen Fahrzeugluftreifens weist der Querschnitt senkrecht zur Umfangsrichtung der zumindest einen Umfangsrille des Fahrzeugluftreifens, der sich zumindest über mindestens einen Teilabschnitt des Umfangs des Fahrzeugluftreifens senkrecht zur Umfangsrichtung aus den mindestens zwei in radialer Richtung R des Fahrzeugluftreifen aneinander anschließenden Rillenabschnitten zusammensetzt, dem ersten Rillenabschnitt und dem zweiten inneren Rillenabschnitt, die gleiche Position in axialer Richtung des Fahrzeugluftreifens über den Teilabschnitt des Umfangs auf.

In einer Ausführungsform des erfindungsgemäßen Fahrzeugluftreifens ändert der Querschnitt senkrecht zur Umfangsrichtung der zumindest einen Umfangsrille des Fahrzeugluftreifens, der sich zumindest über mindestens einen Teilabschnitt des Umfangs des Fahrzeugluftreifens senkrecht zur Umfangsrichtung aus den mindestens zwei in radialer Richtung R des Fahrzeugluftreifen aneinander anschließenden Rillenabschnitten zusammensetzt, dem ersten Rillenabschnitt und dem zweiten inneren Rillenabschnitt, seine axiale Position über den Umfang des Fahrzeugluftreifens. Dabei kann die axiale Position des Querschnitts über den Umfang des Fahrzeugluftreifens einer Wellenlinie oder einer Zick-Zack-Linie folgen. Eine Ausführungsform des erfindungsgemäßen Fahrzeugluftreifens kann auch Umfangsrillen aufweisen, bei denen sich über verschiedene Teilabschnitte des Umfangs des Fahrzeugluftreifens die Position Querschnitts in axialer Richtung zum einen gleich bleibt und sich zum anderen ändert. Ebenso kann sich die Position des Querschnitts in axialer Richtung in verschiedenen Teilabschnitten des Umfangs des Fahrzeugluftreifens verschieden ändern, z.B. in dem die axiale Position des Querschnitts über den Umfang des Fahrzeugluftreifens zum einen einer Wellenlinie und zum anderen einer Zick-Zack-Linie folgt.

Eine weitere Ausführungsform des erfindungsgemäßen Fahrzeugluftreifens weist zumindest eine in Umfangsrichtung des Fahrzeugluftreifens umlaufende, auf eine Profiltiefe PT ausgeführte Umfangsrille über den Umfang des Fahrzeugluftreifens auf, die in mindestens einem Teilabschnitt des Umfangs des Fahrzeugluftreifens sich im Querschnitt senkrecht zur Umfangsrichtung aus den mindestens zwei in radialer Richtung R des Fahrzeugluftreifens aneinander anschließenden Rillenabschnitten zusammensetzt, dem ersten Rillenabschnitt und dem zweiten inneren Rillenabschnitt des Fahrzeugluftreifens, und in mindestens einem Teilabschnitt des Umfangs des Fahrzeugluftreifens als Querschnitt senkrecht zur Umfangsrichtung ein U-Profil aufweist. Hierbei ist das U-Profil vorzugsweise asymmetrisch ausgeführt, z.B. mit einem Querschnitt, der aus der DE 10 2005 042 903 A1 bekannt ist. Vorzugsweise wechseln sich bei der zumindest einen Umfangsrille über den Umfang Teilabschnitte mit einen im Querschnitt senkrecht zur Umfangrichtung, der sich aus den drei in radialer Richtung R des Fahrzeugluftreifen aneinander anschließenden Rillenabschnitten zusammensetzt, mit Teilabschnitten ab, die als Querschnitt senkrecht zur Umfangrichtung ein U-Profil aufweisen. Bevorzugt weisen dabei beide Teilabschnitte in Umfangsrichtung die gleiche Länge auf. Zwischen den beiden Teilabschnitten mit den verschiedenen Querschnitten senkrecht zur Umfangrichtung gibt es noch bevorzugt Übergangsbereiche über eine Strecke des Umfangs, die deutlich kleiner als die Länge der Teilabschnitte in Umfangsrichtung ist. In diesen Bereich wandelt sich die Struktur des Querschnitts von der einen zur anderen Form.

Bei der Ausführungsform mit einem asymmetrischen U-Profil gibt es durch den Wechsel des Querschnitts der Umfangsrillen über den Umfang Bereiche über den Umfang, die durch die mindestens zwei verschiedenen Rillenanschnitte ein gutes Nässeverhalten mit einen geringen Rollwiderstand und einer reduzierten Gefahr von Rillenbrüchen kombinieren und Bereiche, bei denen das Nässeverhalten durch das offene Profil und die Quersteifigkeit durch ein asymmetrisches U-Profil besonders gut ist. Hierbei kann bei Fahrbahnnässe Wasser vom asymmetrischen U-Profil in den zweiten inneren Rillenabschnitt der mehrteiligen Querschnittsfläche des anderen Teilabschnitts gelangen, wodurch die Aquaplaninggefahr bei dieser Ausführungsform weiter verringert wird.

In einer besonders bevorzugten Ausführungsform des erfindungsgemäßen Fahrzeugluftreifens weisen beide Umfangsrillen des Fahrzeugluftreifens, die im Reifenprofil in axialer Richtung A außen liegen, den Wechsel beider Querschnittsformen über den gesamten Umfang auf. Bevorzugt sind dabei die Teilabschnitte bei beiden Umfangsrillen so zueinander angeordnet, dass wenn in einem Teilabschnitt des Umfangs eine der beiden Umfangsrillen die mindestens zweiteilige Querschnittsfläche senkrecht zur Umfangsrichtung aufweist, die andere Umfangsrille als Querschnitt senkrecht zur Umfangrichtung ein U-Profil aufweist. Hierdurch sind Nässeverhalten, wie Aquaplaningfähigkeit, optimaler Rollwiderstand und optimale Quersteifigkeit des Profils gleichmäßig über den Umfang verteilt. Mit zunehmenden Abtrag des Laufstreifens des Fahrzeugluftreifens tragen dann auch die Teilabschnitte des Umfangs, die einen Querschnitt mit den mindestens zwei Rillenabschnitten aufweisen durch den zweiten inneren Rillenabschnitt auch verstärkt zum Aquaplaningverhalten bei und kompensieren so, dass in anderen Teilabschnitten des Umfangs mit abnehmender Rillentiefe weniger Wasser von der Fahrbahn aufgenommen werden kann. Daher sorgt der Profilwechsel über den Umfang, insbesondere in Kombination mit dem unterschiedlichen Profil beider Außenrillen bei Fahrbahnkontakt dafür, dass ein erfindungsgemäßer Fahrzeugluftreifen über eine große Laufzeit ein gutes Aquaplaningverhalten hat.

Zusätzlich kann bei jede Ausführungsform der erfindungsgemäßen Fahrzeugluftreifen im zweiten inneren Rillenabschnitt im Bodenbereich der Umfangsrille eine radial nach außen weisende Struktur angeordnet sein, durch die das Eindringen von kleinen Fremdkörpern in die Umfangsrille erschwert oder verhindert wird.

In einer bevorzugten Ausführungsform der erfindungsgemäßen Fahrzeugluftreifen die beträgt die mittlere Breite des ersten Rillenabschnitts in Achsrichtung A des Fahrzeugluftreifens bei einer Elastizität des Laufstreifens mit einem Elastizitätsmodul bei 60 °C von 6,0 MPa bis 7,0 MPa 0,7 mm bis 2,5 mm, bevorzugt 0,9 bis 2,0 mm und besonders bevorzugt 1,0 bis 1,5 mm. Bevorzugt ist dabei die Breite des ersten Rillenabschnitts in Achsrichtung A in der radialen Richtung R konstant.

In einer anderen bevorzugten Ausführungsform der erfindungsgemäßen Fahrzeugluftreifen die beträgt die mittlere Breite des ersten Rillenabschnitts in Achsrichtung A des Fahrzeugluftreifens bei einer Elastizität des Laufstreifens mit einem Elastizitätsmodul bei 60 °C von 7,0 MPa bis 8,0 MPa 0,55 mm bis 2 mm, bevorzugt 0,8 bis 1,5 mm und besonders bevorzugt 0,9 bis 1,2 mm. Bevorzugt ist dabei die Breite des ersten Rillenabschnitts in Achsrichtung A in der radialen Richtung R konstant.

### Kurzbeschreibung der Zeichnungen

Anhand mehrerer Ausführungsbeispiele soll die Erfindung näher erläutert werden. Es zeigen:
- Fig. 1:: Querschnitt einer Umfangsrille gemäß dem Stand der Technik mit drei Rillenabschnitten
- Fig. 2:: Erste Ausführungsform einer erfindungsgemäßen Umfangsrille mit drei Rillenabschnitten
- Fig. 3:: Zweite Ausführungsform einer erfindungsgemäßen Umfangsrille mit drei Rillenabschnitten
- Fig. 4:: Dritte Ausführungsform einer erfindungsgemäßen Umfangsrille mit drei Rillenabschnitten
- Fig. 5:: Vierte Ausführungsform einer erfindungsgemäßen Umfangsrille mit drei Rillenabschnitten
- Fig. 6:: Fünfte Ausführungsform einer erfindungsgemäßen Umfangsrille mit zwei Rillenabschnitten
- Fig. 7:: Laufstreifen eines erfindungsgemäßen Fahrzeugluftreifens mit zwei Außenrillen, die drei Rillenabschnitte in radialer Richtung aufweisen, bei denen der innere Rillenabschnitt in Achsrichtung asymmetrisch ist
- Fig. 8:: Laufstreifen eines erfindungsgemäßen Fahrzeugluftreifens mit zwei Außenrillen, die über den Umfang abwechselnd ein asymmetrisches U-Profil und drei Rillenabschnitte in radialer Richtung aufweisen, deren innerer Rillenabschnitt in Achsrichtung asymmetrisch ist
- Fig. 9:: asymmetrisches U-Profil einer Umfangsrille
- Fig. 10:: Sechste Ausführungsform einer erfindungsgemäßen Umfangsrille mit drei Rillenabschnitten und einer Struktur im inneren Rillenabschnitt, die das Eindringen von kleinen Fremdkörpern in die Rille erschwert oder verhindert

### Ausführliche Beschreibung der Erfindung

Fig. 2 zeigt eine Umfangsrille 1 einer ersten Ausführungsform eines erfindungsgemäßen Fahrzeugluftreifens. Gezeigt ist der Querschnitt der Umfangsrille 1 senkrecht zur Umfangsrichtung des Fahrzeugluftreifens im Laufstreifen 2 des Fahrzeugluftreifens. Hierbei ist die Umfangsrille 1 unterteilt in drei Rillenabschnitte, einen ersten Rillenabschnitt 4, einen zweiten inneren Rillenabschnitt 5 und einen äußeren dritten Rillenabschnitt 3. Diese Rillenabschnitte sind in einer radialer Richtung R des Fahrzeugluftreifens angeordnet. Hierbei ist sowohl der erste Rillenabschnitt 4 als auch der dritte Rillenabschnitt 3 symmetrisch zu der radialen Richtung R (gezeigt durch den Richtungspfeil R in der Figur 2) angeordnet. Dabei erweitert sich der dritte Rillenabschnitt 3 nach außen zur Oberfläche des Laufstreifens 2 hin. Der Querschnitt des äußeren dritten Rillenabschnitts 3 der in der Figur 2 gezeigten Umfangsrille 1 erweitert sich gleichmäßig in radialer Richtung R nach außen. Entsprechend hat der Querschnitt des dritten Rillenabschnitts 3 senkrecht zur Umfangsrichtung die Form eines gleichschenkligen und damit symmetrischen Trapezes. Im neuen Zustand des Fahrzeugluftreifens weist der dritte Rillenabschnitt 3 an der Oberfläche des Laufstreifens 2 des Fahrzeugluftreifens bei der

Ausführungsform eine Breite GO in axialer Richtung A von 4 mm auf und eine Breite GWₘᵢₙ von 1,2 mm an seiner innersten Stelle. An diesen dritten Rillenabschnitt 3 schließt sich in radialer Richtung R der erste Rillenabschnitt 4 an. Dieser hat bei dem gezeigten Ausführungsbeispiel über seine Ausdehnung in radialer Richtung R eine konstante Breite in axialer Richtung A, die 1,2 mm beträgt. Der erste Rillenabschnitt 4 ist damit gegenüber dem dritten Rillenabschnitt 3 verengt. Weiter weist die Umfangsrille einen zweiten Rillenabschnitt 5 auf. Bei diesem zweiten Rillenabschnitt 5 ist der Abstand der Umfangsrille 1 zur Mitte des Reifens bzw. der Nabe des Rades, das den Fahrzeugluftreifen trägt, am geringsten. Dementsprechend weist der zweite innere Rillenabschnitt 5 in seinem Bodenbereich, dem Bodenbereich der Umfangsrille 6, einen tiefsten Punkt 7 der Umfangsrille auf, der den größten Abstand von der Oberfläche des Laufstreifens 2 des Fahrzeugluftreifens aufweist. Im Neuzustand des Fahrzeugluftreifens ist dieser Abstand die Profiltiefe PT des Fahrzeugluftreifens. Der sich an den ersten Rillenabschnitt 4 anschließende innere zweite Rillenabschnitt 5 weist die größte Querschnittsfläche der drei Rillenabschnitte der Umfangsrille auf. Diese Querschnittsfläche ist asymmetrisch zur radialen Richtung. Sie erstreckt sich beidseitig der radialen Richtung und weist einen Rand ohne Ecken auf.

In der Ebene senkrecht zur Umfangsrichtung des Fahrzeugluftreifens weist die Umfangsrille 1 zwei Seiten auf. Die Seite 8 der Umfangsrille weist zur Mitte des Fahrzeugluftreifens. Die Seite 9 der Umfangsrille weist zur Außenseite des Fahrzeugluftreifens. Beide Seiten der Umfangsrille 1 weisen im Bodenbereich 6 der Umfangrille 1, der Teil des zweiten Rillenabschnitts 5 ist, jeweils eine Krümmung auf. Dabei ist der Krümmungsradius beider Seiten verschieden. Der Krümmungsradius R2 der Krümmung der Seite 8 der Umfangsrille, die zur Mitte des Fahrzeugluftreifens weist, ist kleiner als der Krümmungsradius R1 der Seite 9 der Umfangsrille, die zur Außenseite des Fahrzeugreifens weist. Der Krümmungsradius R2 des Seite 8 der Umfangsrille, die zur Fahrzeugmitte des Fahrzeugluftreifens weist, beträgt 2 mm in dem Ausführungsbeispiel. Der Krümmungsradius R1 der Seite 9 der Umfangsrille, die zur Außenseite des Fahrzeugluftreifens weist, beträgt 4 mm. Damit ist in dem Ausführungsbeispiel der Krümmungsradius R2 der Seite 8, die zur Fahrzeugmitte weist, um 50% kleiner als der Krümmungsradius der anderen Seite 9. In dem Ausführungsbeispiel ist die Querschnittsfläche des zweiten Rillenabschnitts 5 nicht über seine gesamte Höhe H2 in der radialen Richtung R asymmetrisch. In dem gezeigten Ausführungsbeispiel der Fig. 2 weist der dritte Rillenabschnitt 3 in Richtung der radialen Richtung R eine Höhe H3 von 2 mm auf. Der erste Rillenabschnitt 4 weist in Richtung der radialen Richtung R eine Höhe H1 von 3,5 mm auf. Der zweite Rillenabschnitt 5 weist in Richtung der radialen Richtung in Richtung R eine Höhe H2 von 6,5 mm auf. Von dieser Höhe sind 73,8 % der Höhe im inneren Bereich des zweiten Rillenabschnitts 5 asymmetrisch. Der asymmetrische Bereich des zweiten Rillenabschnitts 5 hat daher eine Höhe von 4,8 mm in radialer Richtung R. Die Querschnittsfläche des zweiten Rillenabschnitts 5 zwischen der axialen Richtung R und der Seite 8 der Umfangsrille 1, die zur Mitte des Fahrzeugluftreifens weist, ist im gezeigten Ausführungsbeispiel ca. 1,1 % kleiner als die Querschnittsfläche des zweiten Rillenabschnitts 5 zwischen der radialen Richtung R und der Seite 9 der Umfangsrille 1, die zur Außenseite des Fahrzeugluftreifens weist. Hierbei ist der Prozentwert bezogen auf die Fläche zwischen der radialen Richtung R und der Seite der Umfangsrille, die zur Außenseite des Fahrzeugluftreifens weist. Betrachtet man nur den asymmetrischen Bereich des Querschnitts des zweiten Rillenabschnitts 5, so ist die Fläche zwischen der radialen Richtung R und der Seite 8 der Umfangsrille 1, die zur Mitte des Fahrzeugluftreifens weist, sogar um ca. 1,4 % kleiner als die Querschnittsfläche des zweiten Rillenabschnitts zwischen der radialen Richtung R und der Seite 9 der Umfangsrille 1, die zur Außenseite des Fahrzeugluftreifens weist. Das Verhältnis der Flächen zwischen den einzelnen Seiten 8, 9 der Umfangsrille 1 und der radialen Richtung R ist zusammen mit der Geometrie der Querschnittsfläche wesentlich für das optimale Verhalten der Umfangsrille 1sowohl bezüglich des Nässeverhaltens als auch der Quersteifigkeit des Profils des Laufstreifens des Fahrzeugluftreifens. Flächenverhältnisse zwischen diesen Flächen, die typischerweise benutzt werden, wurden bereits vorher beschrieben. Betont werden soll bei dem in Fig. 2 gezeigten ersten Ausführungsbeispiel einer Umfangsrille 1 eines erfindungsgemäßen Fahrzeugluftreifens, dass der Rand der Querschnittsfläche des zweiten Rillenabschnitts 5 nur eine Gerade auf der Seite 8, die zur Mitte des Fahrzeugreifens weist, aufweist und keinerlei Ecken und weitere Geraden. Entsprechend weist der gesamte Rand der Querschnittsfläche des zweiten Rillenabschnitts 5 - abgesehen von der Geraden - nur Krümmungen auf. Dies führt zu einer erhöhten Steifigkeit des Rillenprofils, insbesondere auf der Seite der Umfangsrille 1, die zur Außenseite des Fahrzeugreifens zeigt, d.h. der Seite 9.

Die Gerade auf der Seite 8, die zur Mitte des Fahrzeugreifens weist, weist bei der ersten Ausführungsform einen Winkel gegenüber der radialen Richtung R von 8,1 ° auf. Hierbei reduziert sich der Abstand der Geraden von der radialen Richtung R mit wachsenden Abstand von der Oberfläche des Laufstreifens 2. Typischerweise beträgt bei einem erfindungsgemäßen Fahrzeugluftreifen, der eine Gerade auf der Seite 8, die zur Mitte des Fahrzeugreifens weist, aufweist, der Winkel gegenüber der radialen Richtung R 0 ° bis 15 °, vorzugsweise 4 ° bis 11 ° und besonders bevorzugt 6 ° bis 9 °.

Auf beiden Seiten 8, 9 des zweiten Rillenabschnittes 5 gibt es jeweils einen Punkt des Randes des Querschnitts, der den größten Abschnitt zur axialen Richtung R aufweist. Der Randpunkt mit maximalen Abstand von der radialen Richtung R, der sich auf der Seite 8 der Umfangsrille 1 befindet, die zur Mitte des Fahrzeugluftreifens weist, weist in axialer Richtung A einen Abstand von der radialen Richtung R von 3,9 mm auf. Dieser Punkt des maximalen Abstands weist zudem von dem tiefsten Punkt 7 des zweiten Rillenabschnitts 5 einen Abstand in radialer Richtung R von 4 mm auf. Der Punkt des Randes der Querschnittsfläche des zweiten Rillenabschnitts 5, der auf der Seite 9 der Umfangsrille 1 liegt, die zur Außenseite des Fahrzeugluftreifens weist, weist von der radialen Richtung R einen Abstand von 4,6 mm auf. Zudem weist dieser Punkt vom tiefsten Punkt 7 der Umfangsrille 1 einen Abstand in radialer Richtung R von 3,8 mm auf. Durch die beiden Punkte des maximalen Abstands auf beiden Seiten 8, 9 der Umfangsrille wird auch eine maximale Breite GWmax der Querschnittsfläche des dritten Rillenabschnitts 5 definiert. Bei dem gezeigten Ausführungsbeispiel beträgt die maximale Breite GWmax des zweiten Rillenabschnitts 5 8,5 mm. Typischerweise beträgt bei einem erfindungsgemäßen Fahrzeugluftreifen die maximale Breite GWmax des zweiten Rillenabschnitts 5 4 mm bis 10 mm, bevorzugt 6 mm bis 9 mm und besonders bevorzugt 7 mm bis 8 mm. Die beiden Punkte des maximalen Abstands GWmax der Querschnittsfläche des zweiten Rillenabschnitts 5 senkrecht zur Umfangsrichtung wurden so gewählt, dass die Umfangsrille 1 sowohl sehr gute Nässeeigenschaften aufweist als auch eine große Quersteifigkeit der beiden Seiten 8, 9 der Umfangsrille, wodurch Rillenbrüche der Umfangsrille vermieden werden. Insgesamt wird das Querschnittsprofil des zweiten Rillenabschnitts 5 der Umfangsrillen 1 des erfinderischen Fahrzeugluftreifens so gewählt, dass eine Umfangsrille 1 aufgrund der Querschnittsfläche des zweiten Rillenabschnitts 5 sehr gute Nässeeigenschaften, z.B. bezüglich Aquaplaning und eine gute Festigkeit gegen Rillenbrüche aufweist. Genau dieser Kompromiss der Eigenschaften zeichnet die Erfindung aus.

Ein Verhältnis, dass diese Eigenschaft sehr gut beschreibt, ist das Verhältnis der maximalen Breite GWmax der Querschnittsfläche des zweiten Rillenabschnitts 5 zu der maximalen Höhe H2 der Querschnittsfläche in Richtung der radialen Richtung R. Bei dem Ausführungsbeispiel, dass in der Fig. 2 gezeigt ist, ist die maximale Breite GWmax senkrecht zur radialen Richtung R der Querschnittsfläche 30,7% größer als die maximale Höhe H2 der Querschnittsfläche in Richtung der radialen Richtung R. Weiter ist bei dem Ausführungsbeispiel der Abstand zur radialen Richtung R des Randpunktes der Querschnittsfläche des zweiten Rillenabschnittes 5 senkrecht zur Umfangsrichtung mit dem größten Abstand zur radialen Richtung R auf der Seite 9, die zur Außenseite des Fahrzeugluftreifens weist, größer als der Abstand des Randpunktes auf der anderen Seite 8 zur radialen Richtung R, der den größten Abstand zur radialen Richtung R aufweist. Dabei ist der Abstand des Randpunktes auf der Seite 9, die zur Außenseite des Fahrzeugluftreifens weist, im Ausführungsbeispiel 17,9 % größer als der entsprechende Abstand des Randpunktes zur radialen Richtung R, der den maximalen Abstand auf der Seite 8 aufweist, die zur Mitte des Fahrzeugluftreifens weist. Typischerweise ist bei einem erfindungsgemäßen Fahrzeugluftreifen der Abstand des Randpunktes mit maximalem Abstand von der radialen Richtung bei der Seite 9, die zur Außenseite des Fahrzeugluftreifens weist, um 5 % bis 35 % größer, bevorzugt um 8 % bis 25 % größer und besonders bevorzugt um 12 % bis 18 % größer als bei der Seite 8, die zur Mitte des Fahrzeugluftreifens weist.

Der Abstand des Randpunkts der Querschnittsfläche des zweiten Rillenabschnitts 5 senkrecht zur Umfangsrichtung mit dem größten Abstand zur radialen Richtung R auf der Seite 9, die zur Außenseite des Fahrzeugluftreifens weist, zum tiefsten Punkt 7 der Umfangsrille beträgt in radialer Richtung 3,8 mm bei einer maximalen Höhe H2 der Querschnittsfläche des zweiten Rillenabschnitts von 6,5 mm. Entsprechend beträgt der Abstand dieses Randpunktes zum tiefsten Punkt der Umfangsrille in radialer Richtung R 58,4 % der maximalen Höhe H2 der Querschnittsfläche des zweiten Rillenabschnitts 5. Typischerweise beträgt der Abstand des Randpunkts der Querschnittsfläche des zweiten Rillenabschnitts 5 senkrecht zur Umfangsrichtung mit dem größten Abstand zur radialen Richtung R auf der Seite 9, die zur Außenseite des Fahrzeugluftreifens weist, zum tiefsten Punkt 7 der Umfangsrille, in radialer Richtung R zwischen 30 % und 80 % der maximalen Höhe H2 der Querschnittsfläche des zweiten Rillenabschnitts 5, bevorzugt zwischen 50 % und 75 % der maximalen Höhe H2 der Querschnittsfläche des zweiten Rillenabschnitts 5 und besonders bevorzugt zwischen 55 % und 65 % der maximalen Höhe H2 der Querschnittsfläche des zweiten Rillenabschnitts 5. Durch diese Positionierung des äußersten Randpunktes der Seite 9 der Umfangsrille, die zur Außenseite des Fahrzeugluftreifens weist, wird die Quersteifigkeit dieser Seite des Profils des Laufstreifens 2 gesteigert.

Der Abstand des Randpunkts der Querschnittsfläche des zweiten Rillenabschnitts 5 senkrecht zur Umfangsrichtung mit größtem Abstand zur radialen Richtung R auf der Seite 8, die zur Mitte des Fahrzeugluftreifens frei ist, zum tiefsten Punkt 7 der Umfangsrille 1 beträgt in dem Ausführungsbeispiel in der radialen Richtung R 4 mm. Entsprechend beträgt der Abstand dieses Randpunktes zum tiefsten Punkt 7 der Umfangsrille 1 61,5% der maximalen Höhe H2 der Querschnittsfläche des zweiten Rillenabschnitts 5 in Richtung der radialen Richtung R.

Typischerweise beträgt der Abstand des Randpunkts der Querschnittsfläche des zweiten Rillenabschnitts 5 senkrecht zur Umfangsrichtung mit dem größten Abstand zur radialen Richtung R auf der Seite 8, die zur Mitte des Fahrzeugluftreifens weist, zum tiefsten Punkt 7 der Umfangsrille, in radialer Richtung R zwischen 50 % und 80 % der maximalen Höhe H2 der Querschnittsfläche des zweiten Rillenabschnitts 5, bevorzugt zwischen 55 % und 75 % der maximalen Höhe H2 der Querschnittsfläche des zweiten Rillenabschnitts 5 und besonders bevorzugt zwischen 60 % und 70 % der maximalen Höhe H2 der Querschnittsfläche des zweiten Rillenabschnitts 5. Durch diese Positionierung des äußersten Randpunktes der Seite 8 der Umfangsrille, die zur Mitte des Fahrzeugluftreifens weist, wird die Aufnahmekapazität der zweiten Rillenabschnitts 5 für Wasser erhöht, wodurch der Beitrag der Umfangsrille 1 zum guten Nässeverhalten des erfindungsgemäßen Fahrzeugluftreifens verbessert wird.

Der Bodenbereich 6 der Umfangsrille 1 weist typischerweise, wie in dem Ausführungsbeispiel gezeigt, die zwei Krümmungsradien R1 und R2 auf. Diese sind im Bodenbereich 6 der Umfangsrille 1 jeweils der kleinsten Krümmungsradien beider Seiten 8 und 9 der Umfangsrille 1. Hierbei ist der kleinste Krümmungsradius R1 der Seite 9 der Umfangsrille 2 im Bodenbereich 6, die zur Außenseite des Fahrzeugluftreifens weist, größer als der kleinste Krümmungsradius R2 der Seite 8 im Bodenbereich 6, die zur Mitte des Fahrzeugluftreifens weist. In dem Ausführungsbeispiel der Fig. 2 beträgt der Krümmungsradius R1 4 mm und der Krümmungsradius R2 2 mm. Entsprechend ist der Krümmungsradius R2, der sich dem Bodenbereich der Seite 8 der Umfangsrille 2 befindet, die zur Mitte des Fahrzeugluftreifens weist, um 50 % kleiner als der Krümmungsradius R1 der anderen Seite 9.

Typischerweise hat der kleinste Krümmungsradius R1 der Seite 9 im Bodenbereich 6 der Umfangsrille 1 bei einem erfindungsgemäßen Fahrzeugluftreifen einen Wert zwischen 1,5 mm und 5,0 mm, bevorzugt zwischen 2,0 mm und 4,2 mm und besonders bevorzugt zwischen 3,5 und 4,0 mm. Der kleinste Krümmungsradius R2 der Seite 8 im Bodenbereich 6 der Umfangsrille 1 hat bei einem erfindungsgemäßen Fahrzeugluftreifen typischerweise einen Wert zwischen 0,7 mm und 2,5 mm, bevorzugt zwischen 1,0 mm und 2,2 mm und besonders bevorzugt zwischen 1,5 und 2,0 mm.

Bei der gezeigten Ausführungsform der Fig. 2 erweitert sich der Querschnitt des äußeren dritten Rillenabschnitts 3 der gezeigten Umfangsrille 1 gleichmäßig nach außen in axialer Richtung A. Daher bilden beide Seiten des dritten Rillenabschnitts 3 Geraden, die zur radialen Richtung R einen Winkel aufweisen, der in dem Ausführungsbeispiel 35° beträgt. Dabei verjüngt sich die Breite GO des ersten Rillenabschnitts 3 von der Oberfläche des Laufstreifens 2 des Fahrzeugluftreifens im Neuzustand von 4 mm auf eine Breite in axialer Richtung von 1,2 mm (GWmin). Bei dem Werkstoff des Laufstreifens 2 des Fahrzeugluftreifens, in dem die gezeigte Umfangsrille angeordnet ist, handelt es sich üblicher Weise um eine Gummimischung. Typischerweise hat der Werkstoff bei 60 °C einen Elastizitätsmodul im Bereich von 11 MaPa, vorzugsweise einen Elastizitätsmodul im Bereich von 4,0 bis 9,0 MaPa und besonders bevorzugt einen Elastizitätsmodul im Bereich von 5,5 bis 8,0 MaPa. In dem gezeigten Ausführungsbeispiel wird ein Elastizitätsmodul von 6,5 MaPa verwendet. Der Elastizitätsmodul wird gemäß DIN EN 527 bestimmt. Weiter weist der Laufstreifen eines erfindungsgemäßen Fahrzeugluftreifens einen Verlustfaktor tan δ auf, der üblicherweise bei 60°C im Bereich 0,03 bis 0,25 liegt, vorzugsweise bei 60 °C im Bereich 0,05 bis 0,2 liegt und besonders vorzugsweise bei 60°C im Bereich 0,75 bis 0,1 liegt. Im gezeigten Ausführungsbeispiel beträgt der Verlustfaktor tan δ 0,085. Der Verlustfaktor des Werkstoffs des Laufstreifens 2 wird gemäß DIN 52 513 bestimmt und beschreibt das Hystereseverhalten des viskoelastischen Werkstoffs des Laufstreifens 2.

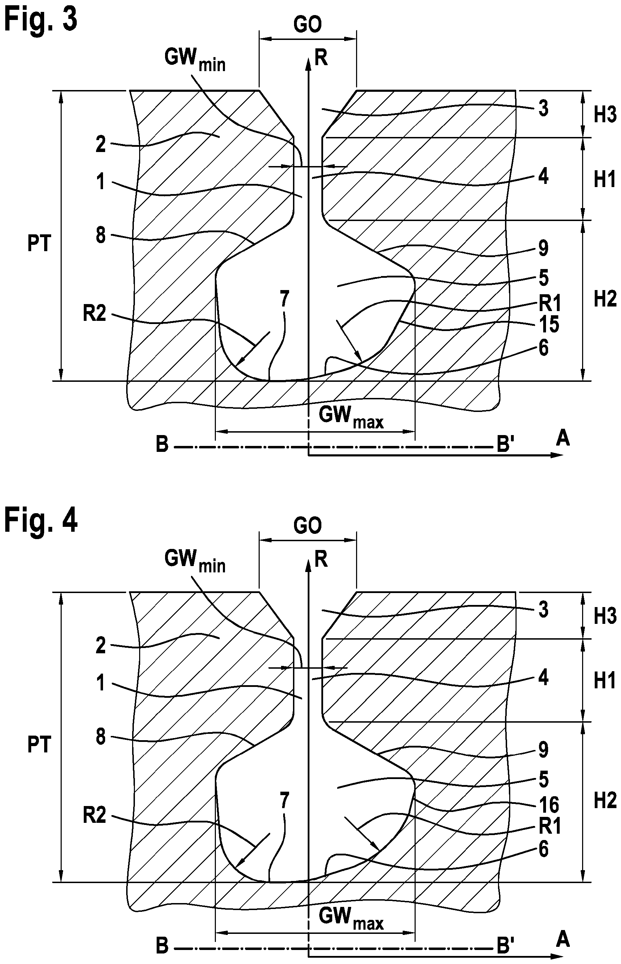

Fig. 3 zeigt eine Umfangsrille 1 einer zweiten Ausführungsform eines erfindungsgemäßen Fahrzeugluftreifens. Gleiche und entsprechende Komponenten sind mit den gleichen Bezugszeichen gekennzeichnet wie bei der in Figur 2 gezeigten ersten Ausführungsform.

Gezeigt ist wie in Fig. 2 der Querschnitt der Umfangsrille 1 senkrecht zur Umfangsrichtung des Fahrzeugluftreifens im Laufstreifen 2 des Fahrzeugluftreifens. Hierbei ist die Umfangsrille 1 unterteilt in drei Rillenabschnitte, einen ersten Rillenabschnitt 4, und einen zweiten inneren Rillenabschnitt 5 und einen äußeren dritten Rillenabschnitt 3. Diese Rillenabschnitte sind in einer radialer Richtung R des Fahrzeugluftreifens angeordnet.

Der erste Rillenabschnitt 4 und der dritte Rillenabschnitt 3 sind gegenüber der ersten Ausführungsform unverändert. Daher ist sowohl der erste Rillenabschnitt 4 als auch der dritte Rillenabschnitt 3 symmetrisch zu der radialen Richtung R (gezeigt durch den Richtungspfeil R in der Figur 3) angeordnet. Weitere Details zu diesen Rillenabschnitten können dem in Fig. 2 gezeigten ersten Ausführungsbeispiel entnommen werden.

Weiter weist die in Fig. 3 gezeigte Umfangsrille 1 einen zweiten Rillenabschnitt 5 auf, der anders ausgestaltet ist wie bei dem in Fig. 2 gezeigten ersten Ausführungsbeispiel. Auch bei diesem zweiten Rillenabschnitt 5 ist der Abstand der Umfangsrille 1 zur Mitte des Reifens bzw. der Nabe des Rades, das den Fahrzeugluftreifen 1 trägt, am geringsten. Dementsprechend weist der zweite innere Rillenabschnitt 5 in seinem Bodenbereich, dem Bodenbereich 6 der Umfangsrille 1 einen tiefsten Punkt 7 der Umfangsrille auf, der den größten Abstand von der Oberfläche des Laufstreifens des Fahrzeugluftreifens aufweist. Im Neuzustand des Fahrzeugluftreifens ist dieser Abstand die Profiltiefe PT des Fahrzeugluftreifens. Der sich an den ersten Rillenabschnitt anschließende zweite innere Rillenabschnitt 5 weist die größte Querschnittsfläche der drei Rillenabschnitte der Umfangsrille auf. Diese Querschnittsfläche ist asymmetrisch zur radialen Richtung. Sie erstreckt sich beidseitig der radialen Richtung und weist einen Rand ohne Ecken auf.

In der Ebene senkrecht zur Umfangsrichtung des Fahrzeugluftreifens weist die Umfangsrille 1 zwei Seiten auf. Die Seite 8 der Umfangsrille weist zur Mitte des Fahrzeugluftreifens. Die Seite 9 der Umfangsrille weist zur Außenseite des Fahrzeugluftreifens. Beide Seiten der Umfangsrille weisen wie beim in Fig. 2 gezeigten ersten Ausführungsbeispiel im Bodenbereich 6 der Umfangsrille 1, der Teil des zweiten Rillenabschnitts 5 ist, jeweils eine Krümmung auf. Dabei ist der Krümmungsradius beider Seiten verschieden. Der Krümmungsradius der Krümmung R2 der Seite 8 der Umfangsrille, die zur Mitte des Fahrzeugluftreifens weist, ist kleiner als der Krümmungsradius R1 der Seite 9 der Umfangsrille, die zur Außenseite des Fahrzeugreifens weist. Der Krümmungsradius R2 des Seite 8 der Umfangsrille, die zur Fahrzeugmitte des Fahrzeugluftreifens weist, beträgt 2 mm in dem Ausführungsbeispiel. Der Krümmungsradius R1 der Seite 9 der Umfangsrille, die zur Außenseite des Fahrzeugluftreifens weist, beträgt 4 mm. Damit ist in dem Ausführungsbeispiel der Krümmungsradius R2 der Seite 8, die zur Fahrzeugmitte weist, um 50 % kleiner als der Krümmungsradius R1 der anderen Seite 9. In dem Ausführungsbeispiel ist die Querschnittsfläche des zweiten Rillenabschnitts 5 nicht über seine gesamte Höhe in der radialen Richtung R asymmetrisch.

Der zweite Rillenabschnitt 5 weist in Richtung der radialen Richtung in Richtung Reine Höhe H2 von 6,5 mm auf. Von dieser Höhe sind 78,7 % der Höhe im inneren Bereich des dritten Rillenabschnitts 5 asymmetrisch. Der asymmetrische Bereich des dritten Rillenabschnitts 5 hat daher eine Höhe von 5,12 mm in radialer Richtung R.

Gegenüber dem in Fig. 2 gezeigten ersten Ausführungsbeispiel einer Umfangsrille 1 eines erfindungsgemäßen Fahrzeugluftreifens weist der Rand der Querschnittsfläche des dritten Rillenabschnitts 5 beim in Fig. 3 gezeigten zweiten Ausführungsbeispiel eine Gerade auf beiden Seiten 8 und 9 und keinerlei Ecken und weitere Geraden auf. Entsprechend weist der gesamte Rand der Querschnittsfläche des dritten Rillenabschnitts 5 - abgesehen von den beiden Geraden - Krümmungen auf.

Dabei ist die Gerade 15 auf der Seite 9 der Umfangsrille 1, die zur Außenseite des Fahrzeugreifens zeigt, so ausgeführt, dass sie zu einer erhöhten Steifigkeit des Rillenprofils, insbesondere an der Seite 9 beiträgt.

Die Gerade 15 ist gegenüber der radialen Richtung R um 33,3° geneigt und läuft mit zunehmender Tiefe der Umfangsrille auf die radiale Richtung R zu. Sie erstreckt sich dabei in radialer Richtung R über 1,95 mm, was 30,0 % der maximalen Höhe H2 der Querschnittsfläche der zweiten Rillenabschnitts 5 entspricht.

Auf beiden Seiten 8, 9 des zweiten Rillenabschnittes 5 gibt es jeweils einen Punkt des Randes des Querschnitts, der den größten Abschnitt zur axialen Richtung R aufweist. Der Randpunkt mit maximalen Abstand von der radialen Richtung R, der sich auf der Seite 8 der Umfangsrille 1 befindet, die zur Mitte des Fahrzeugluftreifens weist, weist in axialer Richtung A einen Abstand von der radialen Richtung R von 4 mm auf. Der Punkt des Randes der Querschnittsfläche des zweiten Rillenabschnitts 5, der auf der Seite 9 der Umfangsrille 1 liegt, die zur Außenseite des Fahrzeugluftreifens weist, weist von der radialen Richtung R einen Abstand von 4,27 mm auf. Durch die beiden Punkte des maximalen Abstands auf beiden Seiten 8, 9 der Umfangsrille wird auch eine maximale Breite GWmax der Querschnittsfläche des zweiten Rillenabschnitts 5 in axialer Richtung A definiert. Bei dem gezeigten Ausführungsbeispiel beträgt die maximale Breite GWmax des zweiten Rillenabschnitts 5 8,27 mm.

Die Gerade 15 der Seite 9 der Umfangsrille 1, die zur Außenseite des Fahrzeugluftreifens weist, beginnt auf der Seite 9 von der Oberfläche des Laufstreifens 2 des Fahrzeugluftreifens aus betrachtet nahezu unterhalb des Punktes der Seite 9, der den größten Abschnitt zur axialen Richtung R aufweist. Gegenüber diesem Punkt ist die Gerade nach innen zur Reifenmitte hin ausgerichtet und reduziert die Breite des zweiten Rillenabschnitts 5 durch ihre Neigung zu der radialen Richtung R. Gegenüber dem tiefsten Punkt 7 der Umfangsrille beträgt der Abstand der Geraden in radialer Richtung R an ihrem innersten Punkt 1,50 mm, was 23,1 % der maximalen Höhe H2 der Querschnittsfläche des zweiten Rillenabschnitts 5 in der radialen Richtung R entspricht und an ihrem äußersten Punkt 3,45 mm, was 53,1 % der maximalen Höhe H2 der Querschnittsfläche des zweiten Rillenabschnitts 5 in der radialen Richtung R entspricht. An die Gerade 15 schließt sich nach innen nach einem gekrümmten Übergangsbereich der Bereich des Bodenbereichs 6 mit dem Krümmungsradius R1 an.

Die beiden Punkte des maximalen Abstands GWmax der Querschnittsfläche des zweiten Rillenabschnitts 5 senkrecht zur Umfangsrichtung und die Gerade 15 auf der Seite 9 der Umfangsrille 1 wurden generell so gewählt, dass die Umfangsrille 1 sowohl sehr gute Nässeeigenschaften aufweist als auch eine große Quersteifigkeit der beiden Seiten 8,9 der Umfangsrille, wodurch Rillenbrüche der Umfangsrille vermieden werden. Insgesamt wird das Querschnittsprofil des dritten Rillenabschnitts 5 der Umfangsrillen 1 des erfinderischen Fahrzeugluftreifens generell so gewählt, dass eine Umfangsrille 1 aufgrund der Querschnittsfläche des zweiten Rillenabschnitts 5 sehr gute Nässeeigenschaften, z.B. bezüglich Aquaplaning und eine gute Festigkeit gegen Rillenbrüche aufweist. Genau dieser Kompromiss der Eigenschaften zeichnet die Erfindung aus.

Ein Verhältnis, dass diese Eigenschaft sehr gut beschreibt, ist das Verhältnis der maximalen Breite GWmax der Querschnittsfläche des zweiten Rillenabschnitts 5 zu der maximalen Höhe H2 der Querschnittsfläche in Richtung der radialen Richtung R. Bei dem Ausführungsbeispiel, dass in der Fig. 3 gezeigt ist, ist die maximale Breite GWmax senkrecht zur radialen Richtung R der Querschnittsfläche 27,2% größer als die maximale Höhe H2 der Querschnittsfläche in Richtung der radialen Richtung R. Weiter ist bei dem Ausführungsbeispiel der Abstand zur radialen Richtung R des Randpunktes der Querschnittsfläche des zweiten Rillenabschnittes 5 senkrecht zur Umfangsrichtung mit dem größten Abstand zur radialen Richtung R auf der Seite 9, die zur Außenseite des Fahrzeugluftreifens weist, größer als der Abstand des Randpunktes auf der anderen Seite 8 zur radialen Richtung R, der den größten Abstand zur radialen Richtung R aufweist. Dabei ist der Abstand des Randpunktes auf der Seite 9, die zur Außenseite des Fahrzeugluftreifens weist, im Ausführungsbeispiel 17,9 % größer als der entsprechende Abstand des Randpunktes zur radialen Richtung R, der den maximalen Abstand auf der Seite 8 aufweist, die zur Mitte des Fahrzeugluftreifens weist.

Der Abstand des Randpunkts der Querschnittsfläche des zweiten Rillenabschnitts 5 senkrecht zur Umfangsrichtung mit dem größten Abstand zur radialen Richtung R auf der Seite 9, die zur Außenseite des Fahrzeugluftreifens weist, zum tiefsten Punkt 7 der Umfangsrille beträgt in der radialen Richtung R 3,8 mm bei einer maximalen Höhe H2 der Querschnittsfläche des zweiten Rillenabschnitts von 6,5 mm in der radialen Richtung R. Entsprechend beträgt der Abstand dieses Randpunktes zum tiefsten Punkt der Umfangsrille in radialer Richtung R 57% der maximalen Höhe H2 der Querschnittsfläche des zweiten Rillenabschnitts 5. Durch diese Positionierung des äußersten Randpunktes der Seite 9 der Umfangsrille, die zur Außenseite des Fahrzeugluftreifens weist, wird die Quersteifigkeit dieser Seite des Profils des Laufstreifens 2 gesteigert.

Der Abstand des Randpunkts der Querschnittsfläche des zweiten Rillenabschnitts 5 senkrecht zur Umfangsrichtung mit größtem Abstand zur radialen Richtung R auf der Seite 8, die zur Mitte des Fahrzeugluftreifens frei ist, zum tiefsten Punkt 7 der Umfangsrille 1 beträgt in dem Ausführungsbeispiel in der radialer Richtung R 4 mm. Entsprechend beträgt der Abstand dieses Randpunktes zum tiefsten Punkt der Umfangsrille 6 61,5% der maximalen Höhe H2 der Querschnittsfläche des zweiten Rillenabschnitts 5 in Richtung der radialen Richtung R. Durch diese Positionierung des äußersten Randpunktes der Seite 8 der Umfangsrille, die zur Mitte des Fahrzeugluftreifens weist, wird die Aufnahmekapazität der zweiten Rillenabschnitts 5 für Wasser erhöht, wodurch der Beitrag der Umfangsrille 1 zum guten Nässeverhalten des erfindungsgemäßen Fahrzeugluftreifens verbessert wird.

Der Bodenbereich 6 der Umfangsrille 1 weist in dem Ausführungsbeispiel die zwei bereits angesprochenen Krümmungsradien R1 und R2 auf. Diese sind die Hauptkrümmungsradien der beiden Seiten 8 und 9 im Bodenbereich der Umfangsrille 1, d.h. die Krümmungsradien, durch die die Kontur beider Seiten im Bodenbereich über die größte Seitenlänge vorgegeben ist. Hierbei ist der Hauptkrümmungsradius R1 der Seite 9 der Umfangsrille 1, die zur Außenseite des Fahrzeugluftreifens weist, bei Ausführungsbespielen der erfindungsgemäßen Fahrzeugluftreifen wie dem in Figur 3 gezeigten größer als der Hauptkrümmungsradius R2 der Seite 8, die zur Mitte des Fahrzeugluftreifens weist. In dem Ausführungsbeispiel beträgt der Hauptkrümmungsradius R1 4 mm und der Hauptkrümmungsradius R2 2 mm. Entsprechend ist der Hauptkrümmungsradius R2, der sich dem Bodenbereich der Seite 8 der Umfangsrille 1 befindet, die zur Mitte des Fahrzeugluftreifens weist, um 50 % kleiner als der Hauptkrümmungsradius R1 der anderen Seite. Typischerweise ist der der Hauptkrümmungsradius R2, der sich dem Bodenbereich der Seite 8 der Umfangsrille 1 befindet, die zur Mitte des Fahrzeugluftreifens weist, bei erfindungsgemäßen Fahrzeugluftreifen um 20 % kleiner als der Hauptkrümmungsradius R1 im Bodenbereich der anderen Seite, bevorzugt um 35 % kleiner als der Hauptkrümmungsradius R1 im Bodenbereich der anderen Seite und besonders bevorzugt um 50 % kleiner als der Hauptkrümmungsradius R1 im Bodenbereich der anderen Seite.

Der Werkstoff des Laufstreifens 2 des erfindungsgemäßen Fahrzeugluftreifens mit der in Fig. 3 gezeigten zweiten Ausführungsform einer Umfangsrille 1 entspricht dem der in Fig. 2 gezeigten ersten Ausführungsform einer Umfangsrille 1.

Fig. 4 zeigt eine Umfangsrille 1 einer dritte Ausführungsform eines erfindungsgemäßen Fahrzeugluftreifens. Gleiche und entsprechende Komponenten sind mit den gleichen Bezugszeichen gekennzeichnet wie bei der in Figur 2 gezeigten ersten Ausführungsform.

Gezeigt ist wie in Fig. 2 der Querschnitt der Umfangsrille 1 senkrecht zur Umfangsrichtung des Fahrzeugluftreifens im Laufstreifen 2 des Fahrzeugluftreifens. Hierbei ist die Umfangsrille 1 unterteilt in drei Rillenabschnitte, einen ersten Rillenabschnitt 4, einen zweiten inneren Rillenabschnitt 5 und einen äußeren dritten Rillenabschnitt 3,. Diese Rillenabschnitte sind in einer radialer Richtung R des Fahrzeugluftreifens angeordnet.

Der erste Rillenabschnitt 4 und der dritte Rillenabschnitt 3 sind gegenüber der ersten und zweiten Ausführungsform unverändert. Daher ist sowohl der erste Rillenabschnitt 4 als auch der dritte Rillenabschnitt 3 symmetrisch zu der radialen Richtung R (gezeigt durch den Richtungspfeil R in der Figur 4) angeordnet. Weitere Details zu diesen Rillenabschnitten können der in Fig. 2 gezeigten ersten Ausführungsform entnommen werden.

Weiter weist die in Fig. 4 gezeigte Umfangsrille 1 einen zweiten Rillenabschnitt 5 auf, der anders ausgestaltet ist wie bei dem in Fig. 2 gezeigten ersten Ausführungsbeispiel. Auch bei diesem zweiten Rillenabschnitt 5 ist der Abstand der Umfangsrille 2 zur Mitte des Reifens bzw. der Nabe des Rades, das den Fahrzeugluftreifen 1 trägt, am geringsten. Dementsprechend weist der zweite innere Rillenabschnitt 5 in seinem Bodenbereich, dem Bodenbereich 6 der Umfangsrille 1, einen tiefsten Punkt 7 der Umfangsrille auf, der den größten Abstand von der Oberfläche des Laufstreifens des Fahrzeugluftreifens aufweist. Im Neuzustand des Fahrzeugluftreifens ist dieser Abstand die Profiltiefe PT des Fahrzeugluftreifens. Der sich an den ersten Rillenabschnitt anschließende zweite innere Rillenabschnitt 5 weist die größte Querschnittsfläche der drei Rillenabschnitte der Umfangsrille auf. Diese Querschnittsfläche ist asymmetrisch zur radialen Richtung. Sie erstreckt sich beidseitig der radialen Richtung und weist einen Rand ohne Ecken auf.

In der Ebene senkrecht zur Umfangsrichtung des Fahrzeugluftreifens weist die Umfangsrille 1 zwei Seiten auf. Die Seite 8 der Umfangsrille weist zur Mitte des Fahrzeugluftreifens. Die Seite 9 der Umfangsrille weist zur Außenseite des Fahrzeugluftreifens. Beide Seiten der Umfangsrille weisen wie beim in Fig. 2 gezeigten ersten Ausführungsbeispiel im Bodenbereich 6 der Umfangsrille 1, der Teil des zweiten Rillenabschnitts 5 ist, jeweils eine Krümmung auf. Dabei ist der Krümmungsradius beider Seiten verschieden. Der Krümmungsradius der Krümmung R2 der Seite 8 der Umfangsrille, die zur Mitte des Fahrzeugluftreifens weist, ist kleiner als der Krümmungsradius R1 der Seite 9 der Umfangsrille, die zur Außenseite des Fahrzeugreifens weist. Der Krümmungsradius R2 des Seite 8 der Umfangsrille, die zur Fahrzeugmitte des Fahrzeugluftreifens weist, beträgt 2 mm in dem Ausführungsbeispiel. Der Krümmungsradius R1 der Seite 9 der Umfangsrille, die zur Außenseite des Fahrzeugluftreifens weist, beträgt 4 mm. Damit ist in dem Ausführungsbeispiel der Krümmungsradius R2 der Seite 8, die zur Fahrzeugmitte weist, um 50% kleiner als der Krümmungsradius R1 der anderen Seite 9.

Der zweite Rillenabschnitt 5 weist in Richtung der radialen Richtung in Richtung Reine Höhe H2 von 6,5 mm auf. Von dieser Höhe sind 78,7 % der Höhe im inneren Bereich des zweiten Rillenabschnitts 5 asymmetrisch. Der asymmetrische Bereich des dritten Rillenabschnitts 5 hat daher eine Höhe von 5,12 mm in radialer Richtung R.

Gegenüber der in Fig. 2 gezeigten ersten Ausführungsform einer Umfangsrille 1 eines erfindungsgemäßen Fahrzeugluftreifens weist der Rand der Querschnittsfläche des zweiten Rillenabschnitts 5 bei der in Fig. 4 gezeigten dritten Ausführungsform eine Gerade auf beiden Seiten 8 und 9 und keinerlei Ecken und weitere Geraden auf. Entsprechend weist der gesamte Rand der Querschnittsfläche des zweiten Rillenabschnitts 5 - abgesehen von den beiden Geraden - Krümmungen auf.

Dabei ist die Gerade 16 auf der Seite 9 der Umfangsrille 1, die zur Außenseite des Fahrzeugluftreifens zeigt, so ausgeführt, dass sie zu einer erhöhten Steifigkeit des Rillenprofils, insbesondere an der Seite 9 beiträgt.

Die Gerade 16 ist gegenüber der radialen Richtung R um 13,9° geneigt und läuft mit zunehmender Tiefe der Umfangsrille auf die radiale Richtung R zu. Sie erstreckt sich dabei in radialer Richtung R über 0,93 mm, was 14,3 % der maximalen Höhe H2 der Querschnittsfläche der zweiten Rillenabschnitts 5 entspricht. Die Gerade 16 auf der Seite 9 der Umfangsrille, die zur Außenseite des Fahrzeugluftreifens weist, in dieser dritten Ausführungsform ist kürzer als die entsprechende Gerade 15 der zweiten Ausführungsform und besitzt eine geringere Neigung gegenüber der radialen Richtung.

Typischerweise erstreckt sich bei einen erfindungsgemäßen Fahrzeugluftreifen eine Gerade, die zum Rand der Querschnittsfläche des zweiten Rillenabschnitts 5 senkrecht zur Umfangsrichtung gehört, auf der Seite 9 der Umfangsrille, die zur Außenseite des Fahrzeugluftreifens weist, über höchstens 45 % der maximalen Höhe H2 der Querschnittsfläche des zweiten Rillenabschnitts 5 , vorzugsweise über höchstens 20 % der maximalen Höhe H2 der Querschnittsfläche des zweiten Rillenabschnitts 5 und besonders vorzugsweise über höchstens 5 % der maximalen Höhe H2 der Querschnittsfläche des zweiten Rillenabschnitts 5. Eine solche Gerade weist typischerweise eine Neigung gegenüber der radialen Richtung R von mindestens 5 °, vorzugsweise mindestens 20 ° und besonders vorzugsweise von mindestens 25 ° auf. Dabei weist eine längere Gerade auf der Seite 9 der Umfangsrille 1 eine größere Neigung gegenüber der radialen Richtung R auf. Durch diese Eigenschaften wird die Quersteifigkeit des Profils der Laufstreifens, insbesondere in seinem Schulterbereich erhöht.

Auf beiden Seiten 8, 9 des zweiten Rillenabschnittes 5 gibt es jeweils einen Punkt des Randes des Querschnitts, der den größten Abschnitt zur axialen Richtung R aufweist. Der Randpunkt mit maximalen Abstand von der radialen Richtung R, der sich auf der Seite 8 der Umfangsrille 1 befindet, die zur Mitte des Fahrzeugluftreifens weist, weist in axialer Richtung A einen Abstand von der radialen Richtung R von 4 mm auf. Der Punkt des Randes der Querschnittsfläche des zweiten Rillenabschnitts 5, der auf der Seite 9 der Umfangsrille 1 liegt, die zur Außenseite des Fahrzeugluftreifens weist, weist von der radialen Richtung R einen Abstand von 4,27 mm auf. Durch die beiden Punkte des maximalen Abstands auf beiden Seiten 8, 9 der Umfangsrille wird auch eine maximale Breite GWmax der Querschnittsfläche des zweiten Rillenabschnitts 5 in axialer Richtung A definiert. Bei dem gezeigten Ausführungsbeispiel beträgt die maximale Breite GWmax des zweiten Rillenabschnitts 5 8,27 mm.

Die Gerade 16 der Seite 9 der Umfangsrille 1, die zur Außenseite des Fahrzeugluftreifens weist, beginnt auf der Seite 9 von der Oberfläche des Laufstreifens 2 des Fahrzeugluftreifens aus betrachtet nahezu unterhalb des Punktes der Seite 9, der den größten Abschnitt zur axialen Richtung R aufweist. Gegenüber diesem Punkt ist die Gerade nach innen zur Reifenmitte hin ausgerichtet und reduziert die Breite des zweiten Rillenabschnitts 5 durch ihre Neigung zu der radialen Richtung R. Gegenüber dem tiefsten Punkt 7 der Umfangsrille beträgt der Abstand der Geraden in radialer Richtung R an ihrem innersten Punkt 2,82 mm, was 43,4 % der maximalen Höhe H2 der Querschnittsfläche des zweiten Rillenabschnitts 5 entspricht und an ihrem äußersten Punkt 3,75 mm, was 57,7 % der maximalen Höhe H2 der Querschnittsfläche des zweiten Rillenabschnitts 5 entspricht. An die Gerade 16 schließt sich nach innen nach einem gekrümmten Übergangsbereich der Bereich des Bodenbereichs 6 mit dem Krümmungsradius R1 an.

Die beiden Punkte des maximalen Abstands GWmax der Querschnittsfläche des dritten Rillenabschnitts 5 senkrecht zur Umfangsrichtung und die Gerade 16 auf der Seite 9 der Umfangsrille 1 wurden so gewählt, dass die Umfangsrille 1 sowohl sehr gute Nässeeigenschaften aufweist als auch eine große Quersteifigkeit der beiden Seiten 8,9 der Umfangsrille, wodurch Rillenbrüche der Umfangsrille vermieden werden. Insgesamt wird das Querschnittsprofil des zweiten Rillenabschnitts 5 der Umfangsrillen 1 des erfinderischen Fahrzeugluftreifens so gewählt, dass eine Umfangsrille 1 aufgrund der Querschnittsfläche des dritten Rillenabschnitts 5 sehr gute Nässeeigenschaften, z.B. bezüglich Aquaplaning und eine gute Festigkeit gegen Rillenbrüche aufweist. Genau dieser Kompromiss der Eigenschaften zeichnet die Erfindung aus.

Ein Verhältnis, dass diese Eigenschaft sehr gut beschreibt, ist das Verhältnis der maximalen Breite GWmax der Querschnittsfläche des zweiten Rillenabschnitts 5 zu der maximalen Höhe H2 der Querschnittsfläche in Richtung der radialen Richtung R. Bei dem Ausführungsbeispiel, dass in der Fig. 4 gezeigt ist, ist die maximale Breite GWmax senkrecht zur radialen Richtung R der Querschnittsfläche 27,2% größer als die maximale Höhe H2 der Querschnittsfläche in Richtung der radialen Richtung R. Weiter ist bei dem Ausführungsbeispiel der Abstand zur radialen Richtung R des Randpunktes der Querschnittsfläche des zweiten Rillenabschnittes 5 senkrecht zur Umfangsrichtung mit dem größten Abstand zur radialen Richtung R auf der Seite 9, die zur Außenseite des Fahrzeugluftreifens weist, größer als der Abstand des Randpunktes auf der anderen Seite 8 zur radialen Richtung R, der den größten Abstand zur radialen Richtung R aufweist. Dabei ist der Abstand des Randpunktes auf der Seite 9, die zur Außenseite des Fahrzeugluftreifens weist, im Ausführungsbeispiel 17,9 % größer als der entsprechende Abstand des Randpunktes zur radialen Richtung R, der den maximalen Abstand auf der Seite 8 aufweist, die zur Mitte des Fahrzeugluftreifens weist.

Der Abstand des Randpunkts der Querschnittsfläche des zweiten Rillenabschnitts 5 senkrecht zur Umfangsrichtung mit dem größten Abstand zur radialen Richtung R auf der Seite 9, die zur Außenseite des Fahrzeugluftreifens weist, zum tiefsten Punkt 7 der Umfangsrille beträgt 3,8 mm bei einer maximalen Höhe H2 der Querschnittsfläche des dritten Rillenabschnitts von 6,5 mm. Entsprechend beträgt der Abstand dieses Randpunktes zum tiefsten Punkt der Umfangsrille in radialer Richtung R 58,4 % der maximalen Höhe der Querschnittsfläche des dritten Rillenabschnitts 5. Durch diese Positionierung des äußersten Randpunktes der Seite 9 der Umfangsrille, die zur Außenseite des Fahrzeugluftreifens weist, wird die Quersteifigkeit dieser Seite des Profils des Laufstreifens 2 gesteigert.

Der Abstand des Randpunkts der Querschnittsfläche des zweiten Rillenabschnitts 5 senkrecht zur Umfangsrichtung mit größtem Abstand zur radialen Richtung R auf der Seite 8, die zur Mitte des Fahrzeugluftreifens frei ist, zum tiefsten Punkt 7 der Umfangsrille 1 beträgt in dem Ausführungsbeispiel 4 mm. Entsprechend beträgt der Abstand dieses Randpunktes zum tiefsten Punkt der Umfangsrille 6 61,5% der maximalen Höhe H2 der Querschnittsfläche des zweiten Rillenabschnitts 5 in Richtung der radialen Richtung R. Durch diese Positionierung des äußersten Randpunktes der Seite 8 der Umfangsrille, die zur Mitte des Fahrzeugluftreifens weist, wird die Aufnahmekapazität des zweiten Rillenabschnitts 5 für Wasser erhöht, wodurch der Beitrag der Umfangsrille 1 zum guten Nässeverhalten des erfindungsgemäßen Fahrzeugluftreifens verbessert wird.

Der Bodenbereich 6 der Umfangsrille 1 weist typischerweise, wie in dem Ausführungsbeispiel gezeigt, die zwei Krümmungsradien R1 und R2 auf. Diese sind im Bodenbereich 6 der Umfangsrille 1 jeweils der kleinsten Krümmungsradien beider Seiten 8 und 9 der Umfangsrille 1. Hierbei ist der kleinste Krümmungsradius R1 der Seite 9 der Umfangsrille 1 im Bodenbereich 6, die zur Außenseite des Fahrzeugluftreifens weist, größer als der kleinste Krümmungsradius R2 der Seite 8 im Bodenbereich 6, die zur Mitte des Fahrzeugluftreifens weist. In dem Ausführungsbeispiel beträgt der Krümmungsradius R1 4 mm und der Krümmungsradius R2 2 mm. Entsprechend ist der Krümmungsradius R2, der sich dem Bodenbereich 6 der Seite 8 der Umfangsrille 1 befindet, die zur Mitte des Fahrzeugluftreifens weist, um 50 % kleiner als der Krümmungsradius R1 der anderen Seite 9.

Der Werkstoff des Laufstreifens 2 des erfindungsgemäßen Fahrzeugluftreifens mit der in Fig. 4 gezeigten dritten Ausführungsform einer Umfangsrille 1 entspricht dem der in Fig. 2 gezeigten ersten Ausführungsform einer Umfangsrille 1.

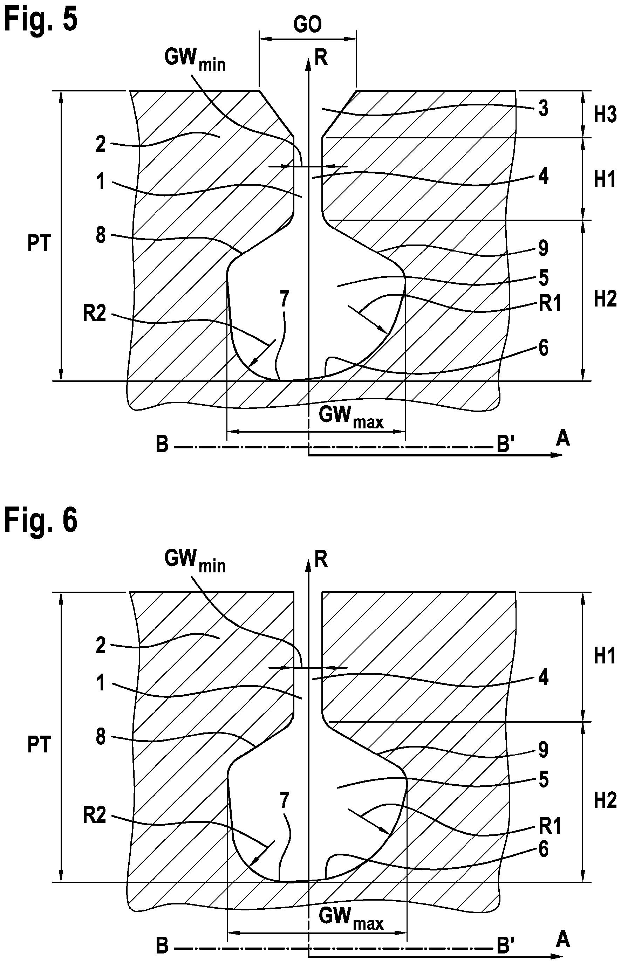

Fig. 5 zeigt eine Umfangsrille 1 einer vierten besonders bevorzugten Ausführungsform eines erfindungsgemäßen Fahrzeugluftreifens. Gleiche und entsprechende Komponenten sind mit den gleichen Bezugszeichen gekennzeichnet wie bei der in Figur 2 gezeigten ersten Ausführungsform.

Gezeigt ist wie in Fig. 2 der Querschnitt der Umfangsrille 1 senkrecht zur Umfangsrichtung des Fahrzeugluftreifens im Laufstreifen 2 des Fahrzeugluftreifens. Hierbei ist die Umfangsrille 1 unterteilt in drei Rillenabschnitte, einen ersten Rillenabschnitt 4, und einen zweiten inneren Rillenabschnitt 5 und einen äußeren dritten Rillenabschnitt 3. Diese Rillenabschnitte sind in einer radialer Richtung R des Fahrzeugluftreifens angeordnet.

Der erste Rillenabschnitt 4 und der dritte Rillenabschnitt 3 sind gegenüber der ersten Ausführungsform unverändert. Daher ist sowohl der erste Rillenabschnitt 4 als auch der dritte Rillenabschnitt 3 symmetrisch zu der radialen Richtung R (gezeigt durch den Richtungspfeil R in der Figur 5) angeordnet. Weitere Details zu diesen Rillenabschnitten können dem in Fig. 2 gezeigten ersten Ausführungsbeispiel entnommen werden.

Weiter weist die in Figur 5 gezeigte Umfangsrille 1 der vierten Ausführungsform einen zweiten Rillenabschnitt 5 auf. Bei diesem zweiten Rillenabschnitt 5 ist der Abstand der Umfangsrille 1 zur Mitte des Reifens bzw. der Nabe des Rades, das den Fahrzeugluftreifen trägt, am geringsten. Dementsprechend weist der zweite innere Rillenabschnitt 5 in seinem Bodenbereich, dem Bodenbereich 6 der Umfangsrille 1, einen tiefsten Punkt 7 der Umfangsrille auf, der den größten Abstand von der Oberfläche des Laufstreifens 2 des Fahrzeugluftreifens aufweist. Im Neuzustand des Fahrzeugluftreifens ist dieser Abstand die Profiltiefe PT des Fahrzeugluftreifens. Der sich an den ersten Rillenabschnitt anschließende innere zweite Rillenabschnitt 5 weist auch beim der vierten Ausführungsform die größte Querschnittsfläche der drei Rillenabschnitte der Umfangsrille auf. Diese Querschnittsfläche ist asymmetrisch zur radialen Richtung. Sie erstreckt sich beidseitig der radialen Richtung und weist einen Rand ohne Ecken auf.

Beide Seiten der in Fig. 5 gezeigten Umfangsrille 1, die Seite 8, die zur Mitte des Fahrzeugluftreifens weist und die Seite 9, die zur Außenseite des Fahrzeugluftreifens weisen im Bodenbereich 6 der Umfangrille 1, der Teil des zweiten Rillenabschnitts 5 ist, jeweils eine Krümmung auf. Dabei ist der Krümmungsradius beider Seiten verschieden. Der Krümmungsradius R2 der Krümmung der Seite 8 der Umfangsrille, die zur Mitte des Fahrzeugluftreifens weist, ist kleiner als der Krümmungsradius R1 der Seite 9 der Umfangsrille, die zur Außenseite des Fahrzeugreifens weist. Der Krümmungsradius R2 des Seite 8 der Umfangsrille, die zur Fahrzeugmitte des Fahrzeugluftreifens weist, beträgt 2 mm in dem Ausführungsbeispiel. Der Krümmungsradius R1 der Seite 9 der Umfangsrille, die zur Außenseite des Fahrzeugluftreifens weist, beträgt 4 mm. Damit ist in dem Ausführungsbeispiel der Krümmungsradius R2 der Seite 8, die zur Fahrzeugmitte weist, um 50% kleiner als der Krümmungsradius der anderen Seite 9. In dem Ausführungsbeispiel ist die Querschnittsfläche des zweiten Rillenabschnitts 5 nicht über seine gesamte Höhe H2 in der radialen Richtung R asymmetrisch. Der zweite Rillenabschnitt 5 weist in Richtung der radialen Richtung in Richtung R eine Höhe H2 von 6,5 mm auf. Von dieser Höhe sind 76 % der Höhe im inneren Bereich des zweiten Rillenabschnitts 5 asymmetrisch. Der asymmetrische Bereich des zweiten Rillenabschnitts 5 hat daher eine Höhe von 4,94 mm in radialer Richtung R. Die Querschnittsfläche des zweiten Rillenabschnitts 5 zwischen der axialen Richtung R und der Seite 8 der Umfangsrille 1, die zur Mitte des Fahrzeugluftreifens weist, ist im gezeigten Ausführungsbeispiel ca. 22,2 % größer als die Querschnittsfläche des zweiten Rillenabschnitts 5 zwischen der radialen Richtung R und der Seite 9 der Umfangsrille 1, die zur Außenseite des Fahrzeugluftreifens weist. Hierbei ist der Prozentwert bezogen auf die Fläche zwischen der radialen Richtung R und der Seite der Umfangsrille, die zur Außenseite des Fahrzeugluftreifens weist. Betrachtet man nur den asymmetrischen Bereich des Querschnitts des zweiten Rillenabschnitts 5, so ist die Fläche zwischen der radialen Richtung R und der Seite 8 der Umfangsrille 1, die zur Mitte des Fahrzeugluftreifens weist, sogar um ca. 29,7 % größer als die Querschnittsfläche des zweiten Rillenabschnitts zwischen der radialen Richtung R und der Seite 9 der Umfangsrille 1, die zur Außenseite des Fahrzeugluftreifens weist. Das Verhältnis der Flächen zwischen den einzelnen Seiten 8 und 9 der Umfangsrille 1 und der radialen Richtung R ist zusammen mit der Geometrie der Querschnittsfläche wesentlich für das optimale Verhalten der Umfangsrille 1sowohl bezüglich des Nässeverhaltens als auch der Quersteifigkeit des Profils des Laufstreifens des Fahrzeugluftreifens.

Auch bei dem in Fig. 5 gezeigten vierten Ausführungsbeispiel einer Umfangsrille 1 eines erfindungsgemäßen Fahrzeugluftreifens weist der Rand der Querschnittsfläche des zweiten Rillenabschnitts 5 nur eine Gerade auf der Seite 8, die zur Mitte des Fahrzeugreifens weist, auf und keinerlei Ecken und weitere Geraden. Entsprechend weist der gesamte Rand der Querschnittsfläche des zweiten Rillenabschnitts 5 - abgesehen von der Geraden - nur Krümmungen auf. Dies führt zu einer erhöhten Steifigkeit des Rillenprofils, insbesondere auf der Seite der Umfangsrille 1, die zur Außenseite des Fahrzeugreifens zeigt, d.h. der Seite 9.

Die Gerade auf der Seite 8, die zur Mitte des Fahrzeugreifens weist, weist bei der ersten Ausführungsform einen Winkel gegenüber der radialen Richtung R von 8,4 ° auf. Hierbei reduziert sich der Abstand der Geraden von der radialen Richtung R mit wachsendem Abstand von der Oberfläche des Laufstreifens 2.

Auf beiden Seiten 8, 9 des zweiten Rillenabschnittes 5 gibt es jeweils einen Punkt des Randes des Querschnitts, der den größten Abschnitt zur axialen Richtung R aufweist. Der Randpunkt mit maximalen Abstand von der radialen Richtung R, der sich auf der Seite 8 der Umfangsrille 1 befindet, die zur Mitte des Fahrzeugluftreifens weist, weist in axialer Richtung A einen Abstand von der radialen Richtung R von 3,45 mm auf. Dieser Punkt des maximalen Abstands weist zudem von dem tiefsten Punkt 7 des zweiten Rillenabschnitts 5 einen Abstand in radialer Richtung R von 4,2 mm auf. Der Punkt des Randes der Querschnittsfläche des zweiten Rillenabschnitts 5, der auf der Seite 9 der Umfangsrille 1 liegt, die zur Außenseite des Fahrzeugluftreifens weist, weist von der radialen Richtung R einen Abstand von 3,95 mm auf. Zudem weist dieser Punkt vom tiefsten Punkt 7 der Umfangsrille 1 einen Abstand in radialer Richtung R von 4,0 mm auf. Durch die beiden Punkte des maximalen Abstands auf beiden Seiten 8, 9 der Umfangsrille wird auch eine maximale Breite GWmax der Querschnittsfläche des dritten Rillenabschnitts 5 definiert. Bei dem gezeigten Ausführungsbeispiel beträgt die maximale Breite GWmax des zweiten Rillenabschnitts 5 7,4 mm. Die beiden Punkte des maximalen Abstands GWmax der Querschnittsfläche des zweiten Rillenabschnitts 5 senkrecht zur Umfangsrichtung wurden so gewählt, dass die Umfangsrille 1 sowohl sehr gute Nässeeigenschaften aufweist als auch eine große Quersteifigkeit der beiden Seiten 8 und 9 der Umfangsrille, wodurch Rillenbrüche der Umfangsrille vermieden werden. Insgesamt wird das Querschnittsprofil des zweiten Rillenabschnitts 5 der Umfangsrillen 1 des erfinderischen Fahrzeugluftreifens so gewählt, dass eine Umfangsrille 1 aufgrund der Querschnittsfläche des zweiten Rillenabschnitts 5 sehr gute Nässeeigenschaften, z.B. bezüglich Aquaplaning und eine gute Festigkeit gegen Rillenbrüche aufweist. Ein sehr guter Kompromiss dieser Eigenschaften zeichnet die in Figur 5 gezeigte Umfangsrille 1 aus.

Ein Verhältnis, dass diese Eigenschaft sehr gut beschreibt, ist das Verhältnis der maximalen Breite GWmax der Querschnittsfläche des zweiten Rillenabschnitts 5 zu der maximalen Höhe H2 der Querschnittsfläche in Richtung der radialen Richtung R. Bei dem vierten Ausführungsbeispiel, dass in der Fig. 5 gezeigt ist, ist die maximale Breite GWmax senkrecht zur radialen Richtung R der Querschnittsfläche 13,8% größer als die maximale Höhe H2 der Querschnittsfläche in Richtung der radialen Richtung R. Weiter ist bei dem Ausführungsbeispiel der Abstand zur radialen Richtung R des Randpunktes der Querschnittsfläche des zweiten Rillenabschnittes 5 senkrecht zur Umfangsrichtung mit dem größten Abstand zur radialen Richtung R auf der Seite 9, die zur Außenseite des Fahrzeugluftreifens weist, größer als der Abstand des Randpunktes auf der anderen Seite 8 zur radialen Richtung R, der den größten Abstand zur radialen Richtung R aufweist. Dabei ist der Abstand des Randpunktes auf der Seite 9, die zur Außenseite des Fahrzeugluftreifens weist, im Ausführungsbeispiel 16,7 % größer als der entsprechende Abstand des Randpunktes zur radialen Richtung R, der den maximalen Abstand auf der Seite 8 aufweist, die zur Mitte des Fahrzeugluftreifens weist.

Der Abstand des Randpunkts der Querschnittsfläche des zweiten Rillenabschnitts 5 senkrecht zur Umfangsrichtung mit dem größten Abstand zur radialen Richtung R auf der Seite 9, die zur Außenseite des Fahrzeugluftreifens weist, zum tiefsten Punkt 7 der Umfangsrille beträgt in radialer Richtung 4,0 mm bei einer maximalen Höhe H2 der Querschnittsfläche des zweiten Rillenabschnitts von 6,5 mm. Entsprechend beträgt der Abstand dieses Randpunktes zum tiefsten Punkt der Umfangsrille in radialer Richtung R 61,5% der maximalen Höhe H2 der Querschnittsfläche des zweiten Rillenabschnitts 5. Durch diese Positionierung des äußersten Randpunktes der Seite 9 der Umfangsrille, die zur Außenseite des Fahrzeugluftreifens weist, wird die Quersteifigkeit dieser Seite des Profils des Laufstreifens 2 gesteigert.

Der Abstand des Randpunkts der Querschnittsfläche des zweiten Rillenabschnitts 5 senkrecht zur Umfangsrichtung mit größtem Abstand zur radialen Richtung R auf der Seite 8, die zur Mitte des Fahrzeugluftreifens frei ist, zum tiefsten Punkt 7 der Umfangsrille 1 beträgt in dem Ausführungsbeispiel in der radialen Richtung R 4,2 mm. Entsprechend beträgt der Abstand dieses Randpunktes zum tiefsten Punkt 7 der Umfangsrille 1 64,6% der maximalen Höhe H2 der Querschnittsfläche des zweiten Rillenabschnitts 5 in Richtung der radialen Richtung R. Durch diese Positionierung des äußersten Randpunktes der Seite 8 der Umfangsrille, die zur Mitte des Fahrzeugluftreifens weist, wird die Aufnahmekapazität der zweiten Rillenabschnitts 5 für Wasser erhöht, wodurch der Beitrag der Umfangsrille 1 zum guten Nässeverhalten des erfindungsgemäßen Fahrzeugluftreifens verbessert wird.

Der Bodenbereich 6 der Umfangsrille 1 weist in dem in Figur 5 gezeigten Ausführungsbeispiel die zwei Krümmungsradien R1 und R2 auf. Diese sind im Bodenbereich 6 der Umfangsrille 1 jeweils der kleinsten Krümmungsradien beider Seiten 8 und 9 der Umfangsrille 1. Hierbei ist der kleinste Krümmungsradius R1 der Seite 9 der Umfangsrille 2 im Bodenbereich 6, die zur Außenseite des Fahrzeugluftreifens weist, größer als der kleinste Krümmungsradius R2 der Seite 8 im Bodenbereich 6, die zur Mitte des Fahrzeugluftreifens weist. In dem Ausführungsbeispiel der Fig. 5 beträgt der Krümmungsradius R1 4 mm und der Krümmungsradius R2 2 mm. Entsprechend ist der Krümmungsradius R2, der sich dem Bodenbereich der Seite 8 der Umfangsrille 2 befindet, die zur Mitte des Fahrzeugluftreifens weist, um 50 % kleiner als der Krümmungsradius R1 der anderen Seite 9.

Fig. 6 zeigt eine Umfangsrille 1 einer fünften Ausführungsform eines erfindungsgemäßen Fahrzeugluftreifens. Gleiche und entsprechende Komponenten sind mit den gleichen Bezugszeichen gekennzeichnet wie bei der in Figur 5 gezeigten vierten Ausführungsform. Gezeigt ist wie in Fig. 5 der Querschnitt der Umfangsrille 1 senkrecht zur Umfangsrichtung des Fahrzeugluftreifens im Laufstreifen 2 des Fahrzeugluftreifens. Hierbei ist die Umfangsrille 1 jedoch im Gegensatz zu den bisher gezeigten Ausführungsformen nur in zwei Rillenabschnitte unterteilt, einen ersten äußeren Rillenabschnitt 4 und einen zweiten inneren Rillenabschnitt 5. Diese Rillenabschnitte sind in einer radialer Richtung R des Fahrzeugluftreifens angeordnet.

Der erste Rillenabschnitt 4 ist symmetrisch zur radialen Richtung angeordnet. Der erste äußere Rillenabschnitt 4 endet an der Oberfläche der Laufstreifens 2 der Fahrzeugluftreifens. Er hat in dem gezeigten Ausführungsbeispiel über seine Ausdehnung in radialer Richtung R eine konstante Breite GWₘᵢₙ in axialer Richtung A, die 1,2 mm beträgt. Der erste radiale Rillenabschnitt weist in der Richtung der radialen Richtung R eine Höhe H1 von 5,5 mm auf.

In anderen derartigen Ausführungsformen des erfindungsgemäßen Fahrzeugluftreifens mit Umfangsrillen 1, die sich nur aus dem ersten äußeren Rillenabschnitt 4 und einem zweiten inneren Rillenabschnitt 5 zusammensetzen, beträgt die Höhe H1 des ersten radialen Rillenabschnitts in der Richtung der radialen Richtung R typischerweise 2 mm bis 11 mm, bevorzugt 4 mm bis 9 mm und besonders bevorzugt 5 mm bis 7 mm.

Der sich bei der in Figur 6 gezeigten fünften Ausführungsform an den ersten Rillenabschnitt 4 anschließende zweite innere Rillenabschnitt 5 besitzt einen gegenüber dieser Breite GWₘᵢₙ erweiterten Querschnitt in der axialen Richtung A. Dabei ist der zweite innere Rillenabschnitt 5 der in Figur 6 zeigten fünften Ausführungsform gegenüber dem der in Figur 5 gezeigten vierten Ausführungsform unverändert.

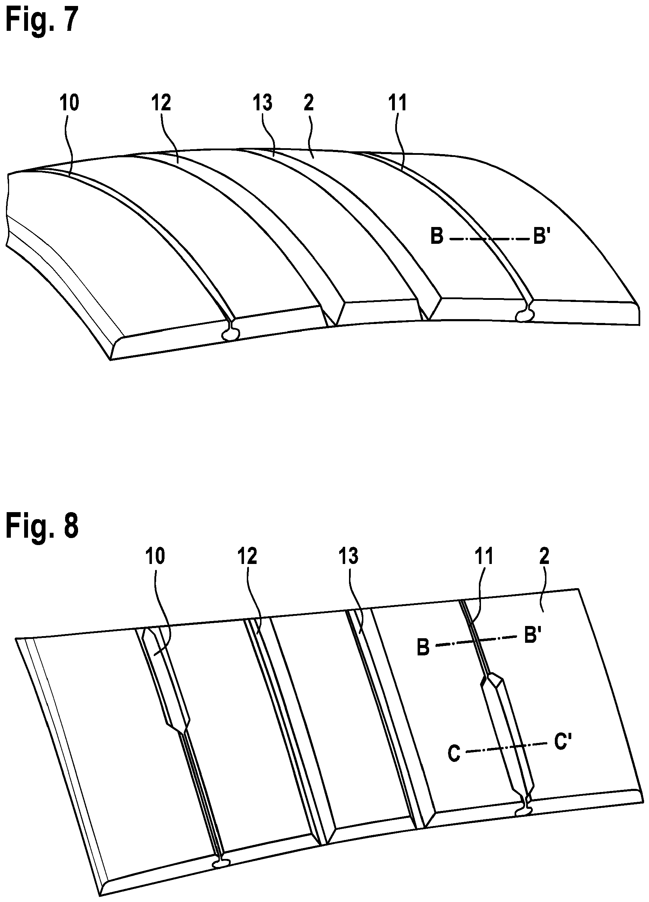

In der Fig. 7 ist der Laufstreifen 2 eines erfindungsgemäßen Fahrzeugluftreifens gezeigt. Der Laufstreifen weist vier Umfangsrillen auf, die Außenrillen 10 und 11 und die Innenrillen 12 und 13. Die beiden Außenrillen 10 und 11 weisen einen Querschnitt senkrecht zur Umfangsrichtung auf, wie er in den Figuren 2 bis 5 gezeigt ist. Entsprechend weisen die beiden Außenrillen 10 und 11 drei Rillenabschnitte 3, 4 und 5 auf. Die beiden Innenrillen 12 und 13 haben dagegen einen V-förmigen oder U-förmigen Querschnitt senkrecht zur Umfangsrichtung des Reifens.

Entsprechend zeigen die Figuren 2 bis 5 die Umfangsrille im Querschnitt entlang der in der Fig. 7 gezeigten Schnittlinie BB`.

Durch die erfindungsgemäße Ausgestaltung der Außenrillen 10, 11 des gezeigten Fahrzeugluftreifens besitzt der Fahrzeugluftreifen sowohl sehr gute Nässeeigenschaften, insbesondere bezüglich Aquaplaning, und trotzdem eine große Quersteifigkeit, durch die Bildung von Rillenbrüchen vermieden wird. Durch diese Verbesserung des Profils der Außenrillen 10, 11 wird insbesondere einem dauerhaft gleichmäßigen Abrollen und damit einer permanent gleichförmigen Beanspruchung des Fahrzeugluftreifens und außerdem den Seitenkräften Rechnung getragen, die auf den Fahrzeugluftreifen während des Fahrzeugbetriebes wirken, wodurch der Schulterbereich des Fahrzeugluftreifens besonders beansprucht wird.

In Fig. 8 ist der Laufstreifen 2 ein weiteren Ausführungsform eines erfindungsgemäßen Fahrzeugluftreifens gezeigt. Auch hier weist der Laufstreifen 2 vier Umfangsrillen auf. Hierbei handelt es sich um zwei Außenrillen 10, 11 und zwei Innenrillen 12, 13. Die Innenrillen 12, 13 weisen ein U-förmiges Profil auf, dass alternativ auch V-förmig ausgestaltet sein kann. Beide Außenrillen 10, 11 weisen in Teilabschnitten des Umfangs zwei unterschiedliche Querschnitte senkrecht zur Umfangsrichtung auf. Über den Umfang wechseln sich die Teilabschnitte mit den beiden verschiedenen Querschnitten der Umfangsrille senkrecht zur Umfangsrichtung ab. Dabei geht am Ende eines Teilabschnitts ein Querschnitt der Umfangsrille in den anderen Querschnitt der Umfangsrille über. In Teilabschnitten der Umfangsrille ist der Querschnitt der Umfangsrille zusammengesetzt aus drei sich aneinander anschließenden Rillenabschnitten 3, 4 und 5, die in radialer Richtung R des Fahrzeugluftreifens hintereinander angeordnet sind. Derartige Querschnitte der Umfangsrille eines erfindungsgemäßen Fahrzeugluftreifens wurden zuvor beschreiben und sind beispielhaft in den Figuren 2 bis 5 gezeigt. In Fig. 8 wird in einem solchen Teilabschnitt die Linie B, B` gezeigt. Sie läuft durch die Umfangsrille 11 in axialer Richtung des Laufstreifens 2. Die Linie B, B` ist auch in den Figuren 2 bis 5 dargestellt, entlang derer der Querschnitt der Umfangsrille 1 in den Figuren gezeigt wird. Generell zeichnet der Querschnitt in diesem Umfangsabschnitt sich durch die Eigenschaften aus, die im Patentanspruch 1 wiedergegeben sind. Verschiedene Ausführungsformen dieses Querschnitts der Umfangsrille wurden bereits zuvor beschrieben und können ebenfalls in Fig. 8 in dem Laufstreifen 2 des Fahrzeugluftreifens benutzt werden. In einem anderen Teilabschnitt des Umfangs der Umfangsrille 11 befindet sich entlang der Line C, C` ein Querschnitt der Umfangsrille 11 senkrecht zur Umfangsrichtung, der ein V- und bevorzugt ein U-förmiges Profil aufweist. Vorzugsweise ist das U-förmige Profil asymmetrisch, wobei die Seite 8 der Umfangsrille, die zur Mitte des Fahrzeugs zeigt, einen kleineren Krümmungsradius im Bodenbereich 6 der Umfangsrille aufweist. Der in diesen Teilabschnitt der Umfangsrille benutzte Querschnitt ist z.B. aus DE 10 2005 042 903 A1 bekannt. In der gezeigten Ausführungsform der Fig. 8 weisen die Teilabschnitte mit wechselndem Querschnitt in Umfangsrichtung die gleiche Länge auf. Es sind jedoch auch hiervon abweichende Längenverhältnisse der Teilabschnitte mit den verschiedenen Querschnitten möglich. Typischerweise beträgt der Anteil der Länge der Teilabschnitte des Umfangs des Fahrzeugluftreifens, die ein Querschnitt aufweist, der sich aus mindestens zwei in radialer Richtung R des Fahrzeugluftreifens aneinander anschließenden Rillenabschnitten 4 und 5 zusammensetzt, gegenüber der Gesamtlänge der Teilabschnitte über den Reifenumfang, in denen sowohl dieser Querschnitt als auch der zweite Querschnitt vorhanden ist, der typischerweise ein U-Profil aufweist, zwischen 23 % und 75 % der Umfangs, vorzugsweise zwischen 30 % und 70 % des Umfangs, und besonders bevorzugt zwischen 40 % und 60 % des Umfangs.

Wenn die Teilabschnitte beider vorhandener Querschnitte der Umfangsrille die gleiche Länge aufweisen, ist in der in Fig. 8 gezeigten bevorzugten Ausführungsform die Anordnung der Teilabschnitte auf beiden Außenrillen 10 und 11 so, dass jeweils in einer der beiden Außenrillen der eine Querschnitt der Umfangsrille vorliegt und im gleichen Teilabschnitt der anderen Außenrille der andere Querschnitt der Umfangsrille vorliegt. Wenn die Teilabschnitte für beide Querschnitte in der Umfangsrille nicht die gleiche Länge in Umfangsrichtung aufweisen, sind die Teilabschnitte auf beiden Außenrillen vorzugsweise so angeordnet, dass die Mitte des Teilabschnitts mit einem Querschnitt, der sich aus mindestens zwei in radialer Richtung des Fahrzeugluftreifens aneinander anschließenden Rillenabschnittes zusammensetzt, auf einer Außenrille in Umfangsrichtung so angeordnet ist, dass auf der anderen Außenrille in Umfangsrichtung an der gleichen Stelle die Mitte des Teilabschnittes angeordnet ist, der das andere Querschnittsprofil aufweist, das vorzugsweise ein U-Profil ist.

Durch die wechselseitigen Querschnitte auf den Außenrillen des Reifens ist jeweils gewährleistet, dass das vorzugsweise U-formige Profil bei Nässe große Mengen Wasser aufnimmt und die andere Außenrille verhältnismäßig viel Wasser im zweiten Rillenabschnitt 5. Somit ist gewährleistet, dass in jedem Umfangspunkt der Laufstreifen 2 des Luftreifens gleichmäßig viel Wasser aufnehmen kann, um der Aquaplaninggefahr entgegen zu wirken. Weiter weisen beide Außenrillen über den gesamten Umfang durch die beiden verschiedenen Querschnitte eine hohe Quersteifigkeit auf, um Rillenbrüchen entgegen zu wirken. Zudem sorgt der verengte erste Rillenabschnitt 4 des Querschnitts der Umfangsrillen 10, 11, wenn er sich aus den mindestens zwei Rillenabschnitten 4 und 5 zusammensetzt, für einen verbesserten, d.h. verringerten, Rollwiderstand in den Teilabschnitten des Umfangs, die einen solchen Querschnitt aufweisen.

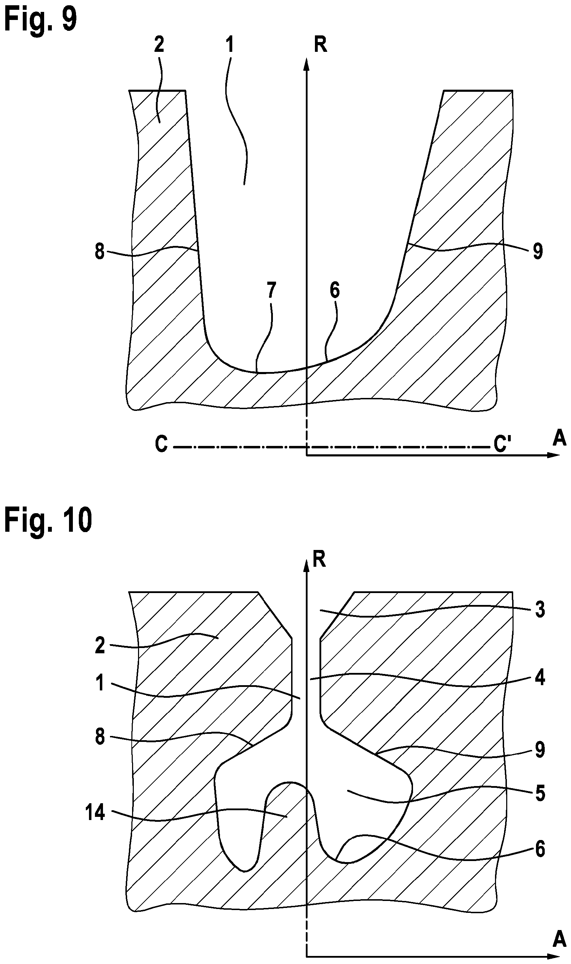

In Fig. 9 ist noch einmal der Querschnitt der Umfangsrillen 10 und 11 gezeigt, wenn der Teilabschnitt dieser Außenrillen 10, 11 ein U-förmiges Profil aufweist. Dieses Profil ist entlang der Schnittlinie C, C` gezeigt, die in der Fig. 8 eingezeichnet ist. Erkennbar ist aus der Fig. 9, dass der Bodenbereich 6 der gezeigten Umfangsrille 1 unterschiedliche Krümmungsradien aufweist. Hierbei ist der Krümmungsradius der Seite 8 der Umfangsrille, die zur Mitte des Fahrzeugluftreifens weist, kleiner als der Krümmungsradius der Seite 9 der Umfangsrille 1, die zur Außenseite des Fahrzeugluftreifens weist. Durch dieses Profil der Umfangsrille, die nur einen Rillenabschnitt aufweist, wird die Quersteifigkeit des Profils des Laufstreifens 2 im Schulterbereich des Fahrzeugluftreifens erhöht.

In Fig. 10 ist eine weitere sechste Ausführungsform eines erfindungsgemäßen Fahrzeugluftreifens gezeigt. Im Detail ist eine Umfangsrille 1 des Fahrzeugluftreifens gezeigt, wobei ihr Querschnittsprofil senkrecht zur Umfangsrichtung aus drei Rillenabschnitten besteht, die sich in der radialen Richtung R hintereinander anordnen. Im zweiten Rillenabschnitt 5, dem radial inneren Rillenabschnitt, ist ausgehend vom Bodenbereich 6 der Umfangsrille 1, eine in radialer Richtung R nach außen weisende Struktur 14 angeordnet, die das Eindringen von kleinen Fremdkörpern erschweren oder verhindern soll. Ansonsten sind die Seiten 8 und 9 der Umfangsrille 1 genauso ausgestaltet wie die bei der in Figur 2 gezeigten Umfangsrille 1. Entsprechend wird die Struktur des zweiten Rillenabschnitts 5 nur durch die zusätzliche nach außen weisende Struktur 14 verändert. Die Fläche des asymmetrischen Bereichs des zweiten Rillenabschnitts 5 wird durch die Struktur 14, die nach außen weist, verändert. Entsprechend ändern sich auch die Flächenverhältnisse des asymmetrischen Bereichs des zweiten Rillenabschnitts. Eine solche Umfangsrille ist dann Teil eines erfindungsgemäßen Fahrzeugluftreifens, wenn ihr Querschnitt senkrecht zur Umfangsrichtung ohne die Querschnittsfläche der Struktur 14 senkrecht zur Umfangsrichtung, die im Bodenbereich der Umfangsrille 1 zusätzlich angeordnet ist und radial nach außen weist, zu berücksichtigen eine Querschnittsfläche mit den zuvor beschriebenen Eigenschaften eines erfindungsgemäßen Fahrzeugluftreifens aufweist. In diesem Ausführungsbeispiel, der sechsten Ausführungsform, wird also gegenüber den zuvor beschriebenen Ausführungsformen nur zusätzlich die Struktur 14 im Bodenbereich 6 der Umfangsrille 1, der zumeist Teil des zweiten Rillenabschnitts ist, angeordnet.

Die im Bodenbereich 6 angeordnete zusätzliche Struktur 14 kann in dem Bereich, der in radialer Richtung nach außen weist und nicht mehr im Bodenbereich 6 der Umfangsrille 1 angeordnet ist, eckige Strukturen wie eine Spitze aufweisen. Eine Spitze ist eine Struktur, bei der die Steigung einer Fläche unstetig von einem Wert auf den anderen übergeht. In Umfangsrichtung kann die Struktur 14 daher einen Grad aufweisen.

Bei einem erfindungsgemäßen Fahrzeugluftreifen weisen die Umfangsrillen, die sich aus mindestens zwei in der radialen Richtung des Fahrzeugluftreifens aneinander anschließenden Rillenabschnitten 4und 5 zusammensetzen, typischerweise eine Profiltiefe PT von 5 mm bis 18 mm auf, bevorzugt eine Profiltiefe PT von 6 mm bis 16 mm, und besonders bevorzugt eine Profiltiefe PT von 9 mm bis 15 mm.

Ist auch ein dritter Rillenabschnitt 3 vorhanden, beträgt seine Breite GO in axialer Richtung A an der Oberfläche des Laufstreifens 2 im Neuzustand des erfindungsgemäßen Fahrzeugluftreifens typischerweise 1 mm bis 5,5 mm, bevorzugt 3 mm bis 5 mm und besonders bevorzugt 3,7 mm bis 4,5 mm.

Wenn ein dritter Rillenabschnitt 3 im Querschnitt einer Umfangsrille 1 vorhanden ist, beträgt seine Höhe H3 in radialer Richtung R dieser Umfangsrillen 1 im Neuzustand des erfindungsgemäßen Fahrzeugluftreifens typischerweise 1 mm bis 5 mm, bevorzugt 1,5 mm bis 4 mm und besonders bevorzugt 1,7 mm bis 2,5 mm.

Die Höhe H1 des ersten Rillenabschnitts 4 in radialer Richtung R dieser Umfangsrillen 1 beträgt für den Fall, dass auch ein dritter Rillenabschnitt 3 im Querschnitt einer Umfangsrille 1 vorhanden ist, typischerweise 1,5 mm bis 9 mm, bevorzugt 2,5 mm bis 8 mm und besonders bevorzugt 3,0 mm bis 7,5 mm. Dabei entspricht die Höhe H1 des ersten Rillenabschnitts 4 typischerweise mindestens 20 % der Profiltiefe PT, bevorzugt mindestens 25 % der Profiltiefe PT und besonders bevorzugt mindestens 28 % der Profiltiefe PT im Neuzustand des Fahrzeugluftreifens.

Die Höhe H2 des zweiten Rillenabschnitts 5 in radialer Richtung R dieser Umfangsrillen 1 beträgt typischerweise 3 mm bis 11 mm, bevorzugt 4 mm bis 9,5 mm und besonders bevorzugt 5 mm bis 8 mm. Dabei entspricht die Höhe H2 des zweiten Rillenabschnitts 5 typischerweise mindestens 40 % der Profiltiefe PT, bevorzugt mindestens 45 % der Profiltiefe PT und besonders bevorzugt mindestens 50 % der Profiltiefe PT im Neuzustand des Fahrzeugluftreifens.

Die Nennbreite der erfindungsgemäßen Fahrzeugluftreifen beträgt typischerweise 280 mm bis 460 mm, bevorzugt 290 mm bis 400 mm und besonders bevorzugt 300 mm bis 330 mm. In den Ausführungsformen, die in den Figuren 5 und 6 gezeigt sind, beträgt die Nennbreite des gezeigten Fahrzeugluftreifen 315 mm. Die Nennbreite der Fahrzeugluftreifen wird definiert nach der Norm ISO 5775.

Das Nennquerschnittsverhältnis, d.h. das Verhältnis der Reifenhöhe zur Nennbreite beträgt typischerweise bei erfindungsgemäßen Fahrzeugluftreifen 40 % bis 95 %, bevorzugt 45 % bis 80 % und besonders bevorzugt 50 % bis 70 %. In den Ausführungsformen der Figuren 7 und 8 beträgt das Verhältnis der Reifenhöhe zur Nennbreite 70%.

Die erfindungsgemäßen Fahrzeugluftreifen weisen typischerweise 2 bis 6 Rillen, bevorzugt 3 bis 5 Rillen und besonders bevorzugt 4 Umfangsrillen auf.

Der Abstand der Außenrillen der erfindungsgemäßen Fahrzeugluftreifen zur Schulter des Fahrzeugluftreifens beträgt typischerweise 40 mm bis 70 mm, bevorzugt 45 mm bis 65 mm und besonders bevorzugt 50 mm bis 55 mm. In den Ausführungsformen der Figuren 7 und 8 beträgt dieser Abstand 52 mm.

Die erfindungsgemäßen Fahrzeugluftreifen werden auf Rädern eingesetzt, die vorzugsweise einen Felgendurchmesser von 19,5 Zoll haben und besonders bevorzugt einen Felgendurchmesser von 22,5 Zoll.

Die erfindungsgemäßen Fahrzeugluftreifen werden bevorzugt bei Bussen und LKW eingesetzt. Typischerweise werden sie für leichte LKW eingesetzt, bevorzugt für mittelschwere LKW, insbesondere mit einem Gesamtgewicht über 7,2 Tonnen und ganz besonders bevorzugt für schwere LKW. Dabei werden die erfindungsgemäßen Fahrzeugluftreifen besonders für die Lenkräder und Anhängerräder verwendet. Die erfindungsgemäßen Fahrzeugluftreifen zeichnen sich durch einen geringen Rollwiderstand und Reifenabrieb aus. Zudem wird insbesondere bei den angesprochenen Rädern durch die erfindungsgemäße Ausgestaltung der Querschnitte der Umfangsrillen eine deutliche Reduzierung der Rissbildung im Laufstreifenprofil, vor allem am Rillengrund erreicht. Insbesondere ist durch die erfindungsgemäße Ausgestaltung der Umfangrillen eine wesentlich längere Nutzung der Reifen bei Fahrzeugen im Fernverkehr möglich. Gerade hier findet eine permanente gleichförmige Belastung der Reifen, insbesondere im Schulterbereich des Profils statt. Am größten ist die gleichförmige Belastung bei den Lenkrädern, da deren Belastung nicht von der Fahrzeugbeladung abhängt und dadurch nicht variiert wird. Die neue Profilausgestaltung ist in der Lage auf diese Probleme gezielt einzugehen und belastungsgerecht die beanspruchenden Kräfte aufzunehmen und im Laufstreifen der Reifen abzuleiten.

Die erfindungsgemäßen Fahrzeugluftreifen weisen Umfangsrillen mit einem verbesserten Profil auf, das sowohl zu besseren Nässeeigenschaften, insbesondere bezüglich Aquaplaning beiträgt und außerdem die Quersteifigkeit der Reifen und damit die Haltfähigkeit der Reifen erhöht. Insbesondere Rillenbrüche im Schulterbereich der Fahrzeugluftreifen werden durch diese neuen Umfangsrillen vermieden. Zusätzlich tragen die Umfangsrillen mit dem verbesserten Profil auch zu einen vorteilhaften, nämlich geringeren Rollwiderstand bei.

Die beschriebenen Ausführungsformen stellen ur Beispiele der erfindungsgemäßen Fahrzeugluftreifen zur Erläuterung der Erfindung dar.

### Bezugszeichenliste

- 1: Umfangsrille
- 2: Laufstreifen eines Fahrzeugluftreifens
- 3: äußerer dritter Rillenabschnitt
- 4: erster Rillenabschnitt
- 5: zweiter Rillenabschnitt
- 6: Bodenbereich der Umfangsrille
- 7: Tiefster Punkt der Umfangsrille
- 8: Seite der Umfangsrille, die zur Mitte des Fahrzeugluftreifens weist
- 9: Seite der Umfangsrille, die zur Außenseite des Fahrzeugluftreifens weist
- 10: Außenrille des Fahrzeugluftreifens
- 11: Außenrille des Fahrzeugluftreifens
- 12: Innenrille des Fahrzeugluftreifens
- 13: Innenrille des Fahrzeugluftreifens
- 14: Struktur im Bodenbereich der Umfangsrille
- 15: Gerade der Seite der Umfangsrille des zweiten Ausführungsbeispiels, die zur Außenseite des Fahrzeugluftreifens weist
- 16: Gerade der Seite der Umfangsrille des zweiten Ausführungsbeispiels, die zur Außenseite des Fahrzeugluftreifens weist
- A: axiale Richtung
- R: radiale Richtung
- GO: Breite des ersten Rillenabschnitts an der Oberfläche des Laufstreifens
- GWmax: maximale Breite der Querschnittsfläche des dritten Rillenabschnitts
- GWmin: Breite des ersten Rillenabschnitts an seiner innersten Stelle
- H1: Höhe des ersten Rillenabschnitts
- H2: Höhe des zweiten Rillenabschnitts
- H3: Höhe des dritten Rillenabschnitts
- PT: Profiltiefe des Fahrzeugluftreifens
- R1: Krümmungsradius der Seite, die zur Außenseite weist, im Bodenbereich
- R2: Krümmungsradius der Seite, die zur Reifenmitte weist, im Bodenbereich

## Patentansprüche

1. Fahrzeugluftreifen, insbesondere Nutzfahrzeugreifen, mit einem eine Profilierung aufweisenden Laufstreifen (2) mit zumindest einer in Umfangsrichtung des Fahrzeugluftreifens umlaufenden, auf eine Profiltiefe PT ausgeführten Umfangsrille (1), welche sich zumindest über mindestens einen Teilabschnitt des Umfangs des Fahrzeugluftreifens im Querschnitt senkrecht zur Umfangrichtung aus mindestens zwei in einer radialer Richtung R des Fahrzeugluftreifens aneinander anschließenden Rillenabschnitten zusammensetzt, einem zu einer in radialer Richtung R des Fahrzeugluftreifens verlaufenden Linie symmetrischen ersten Rillenabschnitt (4), dessen Breite in Achsrichtung A des Fahrzeugluftreifens kleiner als 3 mm ist und um nicht mehr als 10 % variiert, bevorzugt nicht mehr als 2 % variiert und besonders bevorzugt nicht mehr als 0,5 % variiert und einem radial inneren, gegenüber dem ersten Rillenabschnitt (4) in Achsrichtung A erweiterten und die größte Querschnittsfläche von allen Rillenabschnitten aufweisenden zweiten Rillenabschnitt (5), wobei
die Querschnittsfläche des zweiten Rillenabschnitts (5) asymmetrisch zur in radialer Richtung R verlaufenden Linie ist, sich beidseitig der in radialer Richtung R verlaufenden Linie erstreckt und im Bodenbereich (6) der Umfangsrille (1) einen Rand ohne Ecken aufweist, **dadurch gekennzeichnet,**
**dass** die Querschnittsfläche des zweiten Rillenabschnitts (5) zwischen der in radialer Richtung R verlaufenden Linie und der Seite (8) der Umfangsrille (1), die zur Mitte des Fahrzeugreifens weist, zwischen 10% kleiner und 15% größer ist als die Querschnittsfläche des zweiten Rillenabschnitts (5) zwischen der in radialer Richtung R verlaufenden Linie und der Seite (9) der Umfangsrille (1), die zur Außenseite des Fahrzeugluftreifens weist.

2. Fahrzeugluftreifen gemäß Patentanspruch 1, **dadurch gekennzeichnet, dass** der Rand der Querschnittsfläche des zweiten Rillenabschnitts (5) im Bodenbereich (6) der Umfangsrille (1) nur Rundungen aufweist.

3. Fahrzeugluftreifen gemäß mindestens einem der Patentansprüche 1 bis 2, **dadurch gekennzeichnet, dass** im Bodenbereich (6) der Umfangsrille (1) die Seite (8) der Umfangsrille (1) eine Krümmung R2 mit dem kleinsten Krümmungsradius aufweist, die zur Mitte des Fahrzeugluftreifens weist.

4. Fahrzeugluftreifen gemäß Patentanspruch 3, **dadurch gekennzeichnet, dass** im Bodenbereich (6) der Umfangsrille (1) bei der Seite (8) der Umfangsrille (1), die zur Mitte des Fahrzeugluftreifens weist, der kleinste Krümmungsradius R2 der Krümmung um mindestens 20 % kleiner ist als der kleinste Krümmungsradius R1 der Krümmung der anderen Seite (9), bevorzugt um mindestens 35 % kleiner ist als der kleinste Krümmungsradius R1 der Krümmung der anderen Seite (9) und besonders bevorzugt um mindestens 50 % kleiner ist als der kleinste Krümmungsradius R1 der Krümmung der anderen Seite (9).

5. Fahrzeugluftreifen gemäß mindestens einem der Patentansprüche 1 bis 4, **dadurch gekennzeichnet, dass** die zumindest eine in Umfangsrichtung des Fahrzeugluftreifens umlaufende, auf Profiltiefe PT ausgeführte Umfangsrille (1) eine Außenrille (10, 11) des Fahrzeugluftreifens ist.

6. Fahrzeugluftreifen gemäß mindestens einem der Patentansprüche 1 bis 5, **dadurch gekennzeichnet, dass** der Laufstreifen (2) zwei in Umfangsrichtung des Fahrzeugluftreifens umlaufende, auf Profiltiefe PT ausgeführte Umfangsrillen (1) aufweist, welche die beiden Außenrillen (10, 11) des Fahrzeugluftreifens bilden.

7. Fahrzeugluftreifen gemäß mindestens einem der Patentansprüche 1 bis 6, **dadurch gekennzeichnet, dass** über mindestens 35 % der Höhe H2 des zweiten Rillenabschnitts (5) in der radialen Richtung R die Querschnittsfläche des zweiten Rillenabschnitts (5) ausgehend vom Bodenbereich (6) der Umfangsrille (1) asymmetrisch zur radialer Richtung R ist, bevorzugt über mindestens 50 % der Höhe H2 des zweiten Rillenabschnitts (5) in der radialen Richtung R die Querschnittsfläche des zweiten Rillenabschnitts (5) ausgehend vom Bodenbereich (6) der Umfangsrille (1) asymmetrisch zur radialer Richtung R ist und besonders bevorzugt über mindestens 70 % der Höhe H2 des zweiten Rillenabschnitts (5) in der radialen Richtung R die Querschnittsfläche des zweiten Rillenabschnitts (5) ausgehend vom Bodenbereich (6) der Umfangsrille (1) asymmetrisch zur radialer Richtung R ist.

8. Fahrzeugluftreifen gemäß mindestens einem der Patentansprüche 1 bis 7, **dadurch gekennzeichnet, dass** die maximale Breite GWmax der Querschnittsfläche des zweiten inneren Rillenabschnitts (5) senkrecht zur radialen Richtung R um 20 % kleiner bis 50 % größer, bevorzugt 5 % kleiner bis 35 % größer und besonders bevorzugt 10 % bis 175 % größer als die maximale Höhe H2 der Querschnittsfläche des zweiten inneren Rillenabschnitts (5) in Richtung der radialen Richtung R ist.

9. Fahrzeugluftreifen gemäß mindestens einem der Patentansprüche 1 bis 8, **dadurch gekennzeichnet, dass** die zumindest eine in Umfangsrichtung des Fahrzeugluftreifens umlaufende, auf Profiltiefe PT ausgeführte Umfangsrille (1) über den Umfang des Fahrzeugluftreifens in mindestens einem Teilabschnitt des Umfangs des Fahrzeugluftreifens sich im Querschnitt senkrecht zur Umfangsrichtung aus den mindestens zwei in radialer Richtung R des Fahrzeugluftreifens aneinander anschließenden Rillenabschnitten zusammensetzt, , dem ersten Rillenabschnitt (4) und dem zweiten inneren Rillenabschnitt (5) des Fahrzeugluftreifens, und in mindestens einem Teilabschnitt des Umfangs des Fahrzeugluftreifens als Querschnitt senkrecht zur Umfangsrichtung ein U-Profil aufweist.

## Claims

1. Pneumatic vehicle tyre, in particular utility vehicle tyre, having a tread (2) which has a profiling and which has at least one circumferential groove (1) which runs in encircling fashion in the circumferential direction of the pneumatic vehicle tyre, is formed to a profile depth PT and which, at least over at least part of the circumference of the pneumatic vehicle tyre, is made up, in cross section perpendicularly to the circumferential direction, of at least two groove portions adjoining one another in a radial direction R of the pneumatic vehicle tyre, and having a first groove portion (4) which is symmetrical with respect to a line running in the radial direction R of the pneumatic vehicle tyre and the width of which in the axial direction A of the pneumatic vehicle tyre is less than 3 mm and does not vary by more than 10%, preferably not by more than 2% and particularly preferably not by more than 0.5%, and having a radially inner second groove portion (5) which is made wider in the axial direction A in comparison with the first groove portion (4) and has the largest cross-sectional area of all the groove portions, wherein the cross-sectional area of the second groove portion (5) is asymmetrical to the line running in the radial direction R, extends on both sides of the line running in the radial direction R and has an edge without corners in the bottom region (6) of the circumferential groove (1), **characterized in that** the cross-sectional area of the second groove portion (5) between the line running in the radial direction R and the side (8) of the circumferential groove (1) that faces the centre of the vehicle tyre is between 10% smaller and 15% greater than the cross-sectional area of the second groove portion (5) between the line running in the radial direction R and the side (9) of the circumferential groove (1) that faces the outside of the pneumatic vehicle tyre.

2. Pneumatic vehicle tyre according to Claim 1, **characterized in that** the edge of the cross-sectional area of the second groove portion (5) in the bottom region (6) of the circumferential groove (1) only has rounded portions.

3. Pneumatic vehicle tyre according to at least one of Claims 1 to 2, **characterized in that**, in the bottom region (6) of the circumferential groove (1), the side (8) of the circumferential groove (1) has a curvature R2 with the smallest radius of curvature, the curvature facing the centre of the pneumatic vehicle tyre.

4. Pneumatic vehicle tyre according to Claim 3, **characterized in that**, in the bottom region (6) of the circumferential groove (1) on the side (8) of the circumferential groove (1) that faces the centre of the pneumatic vehicle tyre, the smallest radius of curvature R2 of the curvature is at least 20% smaller than the smallest radius of curvature R1 of the curvature of the other side (9), preferably at least 35% smaller than the smallest radius of curvature R1 of the curvature of the other side (9) and particularly preferably at least 50% smaller than the smallest radius of curvature R1 of the curvature the other side (9).

5. Pneumatic vehicle tyre according to at least one of Claims 1 to 4, **characterized in that** the at least one circumferential groove (1) running in encircling fashion in the circumferential direction of the pneumatic vehicle tyre and being formed to profile depth PT is an outer groove (10, 11) of the pneumatic vehicle tyre.

6. Pneumatic vehicle tyre according to at least one of Claims 1 to 5, **characterized in that** the tread (2) comprises two circumferential grooves (1) running in encircling fashion in the circumferential direction of the pneumatic vehicle tyre, being formed to profile depth PT and forming the two outer grooves (10, 11) of the pneumatic vehicle tyre.

7. Pneumatic vehicle tyre according to at least one of Claims 1 to 6, **characterized in that**, over at least 35% of the height H2 of the second groove portion (5) in the radial direction R, the cross-sectional area of the second groove portion (5), starting from the bottom region (6) of the circumferential groove (1), is asymmetrical to the radial direction R, preferably over at least 50% of the height H2 of the second groove portion (5) in the radial direction R, the cross-sectional area of the second groove portion (5), starting from the bottom region (6) of the circumferential groove (1), is asymmetrical to the radial direction R, and particularly preferably over at least 70% of the height H2 of the second groove portion (5) in the radial direction R, the cross-sectional area of the second groove portion (5), starting from the bottom region (6) of the circumferential groove (1), is asymmetrical to the radial direction R.

8. Pneumatic vehicle tyre according to at least one of Claims 1 to 7, **characterized in that** the maximum width GWmax of the cross-sectional area of the second inner groove portion (5) perpendicular to the radial direction R is 20% smaller to 50% greater, preferably 5% smaller to 35% greater and particularly preferably 10% to 175% greater than the maximum height H2 of the cross-sectional area of the second inner groove portion (5) in the direction of the radial direction R.

9. Pneumatic vehicle tyre according to at least one of Claims 1 to 8, **characterized in that** at least one circumferential groove (1) which runs in encircling fashion in the circumferential direction of the pneumatic vehicle tyre and is formed to profile depth PT is made up, over the circumference of the pneumatic vehicle tyre, in at least part of the circumference of the pneumatic vehicle tyre, in cross section perpendicularly to the circumferential direction, of the at least two groove portions adjoining one another in a radial direction R of the pneumatic vehicle tyre, the first groove portion (4) and the second inner groove portion (5) of the pneumatic vehicle tyre, and has a U profile in at least part of the circumference of the pneumatic vehicle tyre as a cross section perpendicular to the circumferential direction.

## Revendications

1. Pneumatique de véhicule, notamment pneu de véhicule utilitaire, avec une bande de roulement (2) présentant un profilage avec au moins une rainure périphérique (1) s'étendant dans la direction périphérique du pneumatique de véhicule, réalisée à une profondeur de profil PT, qui se compose, au moins sur au moins une section partielle de la périphérie du pneumatique de véhicule, en section transversale perpendiculaire à la direction périphérique, d'au moins deux sections de rainure se raccordant l'une à l'autre dans une direction radiale R du pneumatique de véhicule, une première section de rainure (4) symétrique par rapport à une ligne s'étendant dans la direction radiale R du pneumatique du véhicule, dont la largeur dans la direction axiale A du pneumatique du véhicule est inférieure à 3 mm et ne varie pas de plus de 10 %, de préférence ne varie pas de plus de 2 % et de manière particulièrement préférée ne varie pas de plus de 0,5 %, et une deuxième section de rainure radialement intérieure (5), élargie dans la direction axiale A par rapport à la première section de rainure (4) et présentant la plus grande surface de section transversale de toutes les sections de rainure, la surface de section transversale de la deuxième section de rainure (5) étant asymétrique par rapport à la ligne s'étendant dans la direction radiale R, s'étendant des deux côtés de la ligne s'étendant dans la direction radiale R et présentant un bord sans coins dans la zone de fond (6) de la rainure périphérique (1), **caractérisé en ce que** la surface de section transversale de la deuxième section de rainure (5) entre la ligne s'étendant dans la direction radiale R et le côté (8) de la rainure périphérique (1) qui est orienté vers le centre du pneu de véhicule est entre 10 % inférieure et 15 % supérieure à la surface de section transversale de la deuxième section de rainure (5) entre la ligne s'étendant dans la direction radiale R et le côté (9) de la rainure périphérique (1) qui est orienté vers le côté extérieur du pneumatique de véhicule.

2. Pneumatique de véhicule selon la revendication 1, **caractérisé en ce que** le bord de la surface de section transversale de la deuxième section de rainure (5) dans la zone de fond (6) de la rainure périphérique (1) présente uniquement des arrondis.

3. Pneumatique de véhicule selon au moins l'une quelconque des revendications 1 à 2, **caractérisé en ce que** dans la zone de fond (6) de la rainure périphérique (1), le côté (8) de la rainure périphérique (1) présente une courbure R2 avec le plus petit rayon de courbure, qui est orientée vers le centre du pneumatique de véhicule.

4. Pneumatique de véhicule selon la revendication 3, **caractérisé en ce que** dans la zone de fond (6) de la rainure périphérique (1), sur le côté (8) de la rainure périphérique (1) qui est orienté vers le centre du pneumatique de véhicule, le plus petit rayon de courbure R2 de la courbure est inférieur d'au moins 20 % au plus petit rayon de courbure R1 de la courbure de l'autre côté (9), de préférence est inférieur d'au moins 35 % au plus petit rayon de courbure R1 de la courbure de l'autre côté (9) et de manière particulièrement préférée est inférieur d'au moins 50 % au plus petit rayon de courbure R1 de la courbure de l'autre côté (9).

5. Pneumatique de véhicule selon au moins l'une quelconque des revendications 1 à 4, **caractérisé en ce que** l'au moins une rainure périphérique (1) s'étendant dans la direction périphérique du pneumatique de véhicule, réalisée à la profondeur de profil PT, est une rainure extérieure (10, 11) du pneumatique de véhicule.

6. Pneumatique de véhicule selon au moins l'une quelconque des revendications 1 à 5, **caractérisé en ce que** la bande de roulement (2) présente deux rainures périphériques (1) s'étendant dans la direction périphérique du pneumatique de véhicule, réalisées à la profondeur de profil PT, qui forment les deux rainures extérieures (10, 11) du pneumatique de véhicule.

7. Pneumatique de véhicule selon au moins l'une quelconque des revendications 1 à 6, **caractérisé en ce que** sur au moins 35 % de la hauteur H2 de la deuxième section de rainure (5) dans la direction radiale R, la surface de section transversale de la deuxième section de rainure (5) est asymétrique par rapport à la direction radiale R en partant de la zone de fond (6) de la rainure périphérique (1), de préférence, sur au moins 50 % de la hauteur H2 de la deuxième section de rainure (5) dans la direction radiale R, la surface de section transversale de la deuxième section de rainure (5) est asymétrique par rapport à la direction radiale R en partant de la zone de fond (6) de la rainure périphérique (1), et de manière particulièrement préférée, sur au moins 70 % de la hauteur H2 de la deuxième section de rainure (5) dans la direction radiale R, la surface de section transversale de la deuxième section de rainure (5) est asymétrique par rapport à la direction radiale R en partant de la zone de fond (6) de la rainure périphérique (1).

8. Pneumatique de véhicule selon au moins l'une quelconque des revendications 1 à 7, **caractérisé en ce que** la largeur maximale GWmax de la surface de section transversale de la deuxième section de rainure intérieure (5) perpendiculaire à la direction radiale R est 20 % inférieure à 50 % supérieure, de préférence 5 % inférieure à 35 % supérieure et de manière particulièrement préférée 10 % à 175 % supérieure à la hauteur maximale H2 de la surface de section transversale de la deuxième section de rainure intérieure (5) dans la direction de la direction radiale R.

9. Pneumatique de véhicule selon au moins l'une quelconque des revendications 1 à 8, **caractérisé en ce que** l'au moins une rainure périphérique (1) s'étendant dans la direction périphérique du pneumatique de véhicule, réalisée à la profondeur de profil PT sur la périphérie du pneumatique de véhicule, se compose, dans au moins une section partielle de la périphérie du pneumatique de véhicule, en section transversale perpendiculaire à la direction périphérique, des au moins deux sections de rainure se raccordant l'une à l'autre dans la direction radiale R du pneumatique de véhicule, la première section de rainure (4) et la deuxième section de rainure intérieure (5) du pneumatique de véhicule, et présente, dans au moins une section partielle de la périphérie du pneumatique de véhicule, un profil en U en tant que section transversale perpendiculaire à la direction périphérique.
